# EUROPEAN PATENT APPLICATION

(11) **EP 4 838 577 A1**
(43) Date of publication of application: **11.11.2026**
(21) Application number: 26176469.0
(22) Date of filing: 05.05.2026
(51) Int. Cl.: H01M 4/485, H01M 4/131, H01M 4/525, H01M 10/0525, H01M 10/0568, H01M 10/0569

(54) **BATTERY**

(30) Priority: 08.05.2025 US 202563801913 P; 04.02.2026 TW 115104448
(71) Applicant: Largan Energy Material CO., LTD., Taichung City 408213 (TW)
(72) Inventor: CHEN, Jin-Ming, 408213 Taichung City (TW); CHEN, Po-Tsun, 408213 Taichung City (TW); CHENG, Chieh-Hsun, 408213 Taichung City (TW); LIAO, I Ting, 408213 Taichung City (TW)
(74) Representative: Buzzi, Notaro & Antonielli d'Oulx S.p.A.

(57) **Abstract**

A battery includes a positive electrode, a negative electrode and an electrolyte. The positive electrode includes a positive electrode active material, and the negative electrode includes a negative electrode active material. The positive electrode active material includes a lithium-manganese oxide, and the negative electrode active material includes a niobium-titanium composite oxide.

## Description

### BACKGROUND

### Technical Field

The present disclosure relates to a battery. More particularly, the present disclosure relates to a battery suitable for a low-voltage electronic product.

### Description of Related Art

The traditional primary batteries are non-reusable and generate the waste pollution, and the high power consuming electronic products require frequent battery replacements, further increasing the risk of the environmental pollution and the cost of the waste disposal. In order to reduce the environmental pollution and address the issue of frequent battery replacements, the reusable secondary batteries have been developed to reduce the environment pollution and the cost of the waste disposal. However, most secondary batteries on the market are nickel-metal hydride batteries, while the nickel-metal hydride batteries are reusable, which suffer from drawbacks, such as high memory effect, high self-discharge, low energy density and short lifespan. Although the lithium-ion batteries can effectively improve many defects of the nickel-metal hydride batteries, the voltage of the lithium-ion batteries generally exceeds 3 volts, making them unsuitable for the low-voltage electronic products. To ensure the long-term use of the low-voltage electronic products, it is necessary to actively develop the lithium-ion batteries with voltages less than or equal to 3 volts.

### SUMMARY

According to one aspect of the present disclosure, a battery includes a positive electrode, a negative electrode and an electrolyte. The positive electrode includes a positive electrode active material, and the negative electrode includes a negative electrode active material. The positive electrode active material includes a lithium-manganese oxide, and the negative electrode active material includes a niobium-titanium composite oxide. When the lithium-manganese oxide is LiᵢMnⱼOₖ, the following conditions are satisfied: 0.15 ≤ i ≤ 0.50; 0.95 ≤ j ≤ 1.05; and 1.95 ≤ k ≤ 2.05.

According to the battery of the foregoing aspect, when the lithium-manganese oxide is LiᵢMnⱼOₖ, the following condition can be satisfied: 0.25 ≤ i ≤ 0.35.

According to the battery of the foregoing aspect, when a weight percentage of the lithium-manganese oxide in the positive electrode is PIm, the following condition can be satisfied: 93.00% ≤ PIm ≤ 95.00%.

According to the battery of the foregoing aspect, the positive electrode further includes a positive electrode adhesive, when a weight percentage of the positive electrode adhesive in the positive electrode is PCb, the following condition can be satisfied: 2.50% ≤ PCb ≤ 3.00%.

According to the battery of the foregoing aspect, the positive electrode further includes a positive electrode conductive additive, when a weight percentage of the positive electrode conductive additive in the positive electrode is PCa, the following condition can be satisfied: 3.00% ≤ PCa ≤ 3.50%.

According to the battery of the foregoing aspect, when a weight percentage of the niobium-titanium composite oxide in the negative electrode is Ptn, the following condition can be satisfied: 92.00% ≤ Ptn ≤ 93.00%.

According to the battery of the foregoing aspect, the negative electrode further includes a negative electrode adhesive, when a weight percentage of the negative electrode adhesive in the negative electrode is PAb, the following condition can be satisfied: 4.00% ≤ PAb ≤ 4.50%.

According to the battery of the foregoing aspect, the negative electrode further includes a negative electrode conductive additive, when a weight percentage of the negative electrode conductive additive in the negative electrode is PAa, the following condition can be satisfied: 3.00% ≤ PAa ≤ 3.50%.

According to the battery of the foregoing aspect, the electrolyte includes a carbonate ester, when a weight percentage of the carbonate ester in the electrolyte is PEc, the following condition can be satisfied: 88.00% ≤ PEc ≤ 89.00%.

According to the battery of the foregoing aspect, the electrolyte includes a metal salt, when a weight percentage of the metal salt in the electrolyte is PEm, the following condition can be satisfied: 9.50% ≤ PEm ≤ 10.50%.

According to the battery of the foregoing aspect, the electrolyte includes a carbonate ester, the carbonate ester includes an ethylene carbonate and a dimethyl carbonate, when a ratio of the ethylene carbonate to the dimethyl carbonate is Red, the following condition can be satisfied: 0.45 ≤ Red ≤ 0.55.

According to the battery of the foregoing aspect, when a negative electrode/positive electrode capacitance ratio of the battery is Rac, the following condition can be satisfied: 1.15 ≤ Rac ≤ 1.25.

According to the battery of the foregoing aspect, when a working voltage of the battery is WV, the following condition can be satisfied: 1.20 V ≤ WV ≤ 1.70 V.

According to another aspect of the present disclosure, a battery includes a positive electrode, a negative electrode and an electrolyte. The positive electrode includes a positive electrode active material, and the negative electrode includes a negative electrode active material. The positive electrode active material includes a lithium-manganese oxide, and the negative electrode active material includes a niobium-titanium composite oxide. When the lithium-manganese oxide is LiᵢMnⱼOₖ, the niobium-titanium composite oxide is TiₓM1ₐNb_{y}M2_{b}O_{z}M3_{c}, M1, M2 and M3 are different doped elements, M3 is one of fluorine, chlorine, bromine, iodine and astatine, the following conditions are satisfied: 0.05 ≤ i < 1.00; 0.98 ≤ j ≤ 1.02; 1.98 ≤ k ≤ 2.02; 0 < x; 0 < y; 0 < z; 0 ≤ a; 0 ≤ b; and 0 < c.

According to the battery of the foregoing aspect, M3 can be the fluorine.

According to the battery of the foregoing aspect, when a negative electrode/positive electrode capacitance ratio of the battery is Rac, the following condition can be satisfied: 1.10 ≤ Rac ≤ 1.30.

According to the battery of the foregoing aspect, when the lithium-manganese oxide is LiᵢMnⱼOₖ, the following condition can be satisfied: 1.90 ≤ k/j ≤ 2.10.

According to the battery of the foregoing aspect, when the niobium-titanium composite oxide is TiₓM1ₐNb_{y}M2_{b}O_{z}M3_{c}, the following condition can be satisfied: 3.40 ≤ z/y ≤ 3.60.

According to the battery of the foregoing aspect, when the niobium-titanium composite oxide is TiₓM1ₐNb_{y}M2_{b}O_{z}M3_{c}, the following condition can be satisfied: 0.98 ≤ x ≤ 1.02; 1.98 ≤ y ≤ 2.02; and 6.98 ≤ z ≤ 7.02.

According to the battery of the foregoing aspect, when the lithium-manganese oxide is LiᵢMnⱼOₖ, the following condition can be satisfied: 0.20 ≤ i ≤ 0.40.

According to the battery of the foregoing aspect, when a weight percentage of the lithium-manganese oxide in the positive electrode is PIm, the following condition can be satisfied: 90.00% ≤ PIm ≤ 98.00%.

According to the battery of the foregoing aspect, the positive electrode further includes a positive electrode adhesive, when a weight percentage of the positive electrode adhesive in the positive electrode is PCb, the following condition can be satisfied: 1.50% ≤ PCb ≤ 4.00%.

According to the battery of the foregoing aspect, the positive electrode further includes a positive electrode conductive additive, when a weight percentage of the positive electrode conductive additive in the positive electrode is PCa, the following condition can be satisfied: 1.50% ≤ PCa ≤ 6.00%.

According to the battery of the foregoing aspect, when a weight percentage of the niobium-titanium composite oxide in the negative electrode is Ptn, the following condition can be satisfied: 85.00% ≤ Ptn ≤ 98.00%.

According to the battery of the foregoing aspect, the negative electrode further includes a negative electrode adhesive, when a weight percentage of the negative electrode adhesive in the negative electrode is PAb, the following condition can be satisfied: 2.00% ≤ PAb ≤ 6.00%.

According to the battery of the foregoing aspect, the negative electrode further includes a negative electrode conductive additive, when a weight percentage of the negative electrode conductive additive in the negative electrode is PAa, the following condition can be satisfied: 1.50% ≤ PAa ≤ 6.00%.

According to the battery of the foregoing aspect, the electrolyte includes a carbonate ester, when a weight percentage of the carbonate ester in the electrolyte is PEc, the following condition can be satisfied: 88.00% ≤ PEc ≤ 89.00%.

According to the battery of the foregoing aspect, the electrolyte includes a metal salt, when a weight percentage of the metal salt in the electrolyte is PEm, the following condition can be satisfied: 7.00% ≤ PEm ≤ 13.00%.

According to the battery of the foregoing aspect, the carbonate ester includes an ethylene carbonate and a dimethyl carbonate, when a ratio of the ethylene carbonate to the dimethyl carbonate is Red, the following condition can be satisfied: 0.20 ≤ Red ≤ 0.80.

According to the battery of the foregoing aspect, when a fully charged voltage of the battery is FV, the following condition can be satisfied: 1.20 V ≤ FV ≤ 2.80 V.

According to the battery of the foregoing aspect, when a fully discharged voltage of the battery is EV, the following condition can be satisfied: EV < 1.20 V.

According to the battery of the foregoing aspect, when a cycle number of a residual capacity of the battery less than 80% of a maximum capacity of the battery is CN80, the following condition can be satisfied: 40 ≤ CN80.

According to the battery of the foregoing aspect, when a residual capacity of the battery at a 10th charge-discharge cycle is R10C, the following condition can be satisfied: 85.00% ≤ R10C.

According to the battery of the foregoing aspect, when a residual capacity of the battery at a 30th charge-discharge cycle is R30C, the following condition can be satisfied: 80.00% ≤ R30C.

According to the battery of the foregoing aspect, when a residual capacity of the battery at a 50th charge-discharge cycle is R50C, the following condition can be satisfied: 75.00% ≤ R50C.

According to the battery of the foregoing aspect, the metal salt can include a lithium salt.

### BRIEF DESCRIPTION OF THE DRAWINGS

The present disclosure can be more fully understood by reading the following detailed description of the embodiment, with reference made to the accompanying drawings as follows:

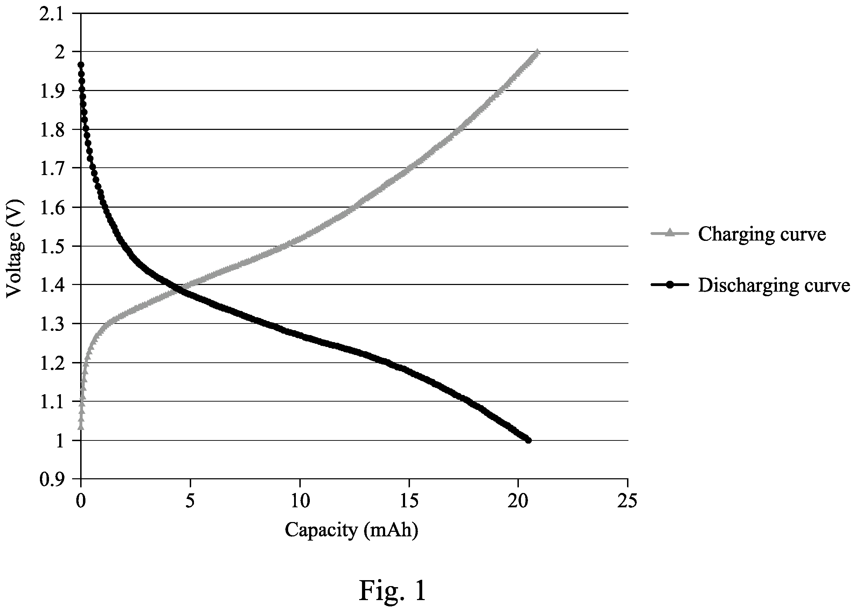

Fig. 1 is a curved diagram of charging and discharging of the battery of Example 9.

### DETAILED DESCRIPTION

According to one embodiment of the present disclosure, a battery includes a positive electrode, a negative electrode and an electrolyte. The positive electrode includes a positive electrode active material, and the negative electrode includes a negative electrode active material. The positive electrode active material includes a lithium-manganese oxide, and the negative electrode active material includes a niobium-titanium composite oxide. Therefore, a small potential difference is generated between the positive electrode and the negative electrode by using the lithium-manganese oxide and the niobium-titanium composite oxide as the positive electrode active material and the negative electrode active material, thereby producing a low-voltage lithium-ion battery.

According to the battery of the present disclosure, when the lithium-manganese oxide is LiᵢMnⱼOₖ, the following condition is satisfied: 0.05 ≤ i < 1.00. Therefore, by limiting the lithium content of the constituent elements of the lithium-manganese oxide, the lithium-manganese oxide produces the appropriate reactive structure, enabling the battery to maintain the stable voltage during the charging and discharging. Furthermore, the following condition can be satisfied: 0.10 ≤ i ≤ 0.90. Furthermore, the following condition can be satisfied: 0.12 ≤ i ≤ 0.80. Furthermore, the following condition can be satisfied: 0.14 ≤ i ≤ 0.60. Furthermore, the following condition can be satisfied: 0.15 ≤ i ≤ 0.50. Furthermore, the following condition can be satisfied: 0.20 ≤ i ≤ 0.40. Furthermore, the following condition can be satisfied: 0.25 ≤ i ≤ 0.35. Furthermore, the following condition can be satisfied: 0.32 ≤ i ≤ 0.34.

According to the battery of the present disclosure, when the lithium-manganese oxide is LiᵢMnⱼOₖ, the following condition is satisfied: 0.80 ≤ j ≤ 1.20. Therefore, by limiting the manganese content of the constituent elements of the lithium-manganese oxide, the lithium-manganese oxide produces the appropriate reactive structure, enabling the battery to maintain the stable voltage during the charging and discharging. Furthermore, the following condition can be satisfied: 0.90 ≤ j ≤ 1.10. Furthermore, the following condition can be satisfied: 0.95 ≤ j ≤ 1.05. Furthermore, the following condition can be satisfied: 0.98 ≤ j ≤ 1.02.

According to the battery of the present disclosure, when the lithium-manganese oxide is LiᵢMnⱼOₖ, the following condition is satisfied: 1.80 ≤ k ≤ 2.20. Therefore, by limiting the oxygen content of the constituent elements of the lithium-manganese oxide, the lithium-manganese oxide produces the appropriate reactive structure, enabling the battery to maintain the stable voltage during the charging and discharging. Furthermore, the following condition can be satisfied: 1.90 ≤ k ≤ 2.10. Furthermore, the following condition can be satisfied: 1.95 ≤ k ≤ 2.05. Furthermore, the following condition can be satisfied: 1.98 ≤ k ≤ 2.02.

According to the battery of the present disclosure, when the lithium-manganese oxide is LiᵢMnⱼOₖ, the following condition can be satisfied: 1.50 ≤ k/j. Therefore, by limiting the oxygen-manganese ratio of the constituent elements of the lithium-manganese oxide, the lithium-manganese oxide produces the stable chemical structure, avoiding the structural damage to the positive electrode during the charging and discharging. Furthermore, the following condition can be satisfied: 1.60 ≤ k/j ≤ 2.50. Furthermore, the following condition can be satisfied: 1.80 ≤ k/j ≤ 2.20. Furthermore, the following condition can be satisfied: 1.90 ≤ k/j ≤ 2.10.

According to the battery of the present disclosure, when the niobium-titanium composite oxide is TiₓM1ₐNb_{y}M2_{b}O_{z}M3_{c}, M1, M2 and M3 are different doped elements, M3 is one of fluorine, chlorine, bromine, iodine and astatine, the following conditions are satisfied: 0 < x; 0 < y; 0 < z; 0 ≤ a; 0 ≤ b; and 0 < c. Therefore, the chemical structure of the niobium-titanium composite oxide can be adjusted to increase the inserted number, the insertion and extraction rate and the reaction stability of the lithium ion by doping the fluorine, the chlorine, the bromine, the iodine or the astatine in the niobium-titanium composite oxide, which is favorable for improving the energy density, the charge and discharge rate and the charge and discharge safety of the negative electrode.

According to the battery of the present disclosure, the niobium-titanium composite oxide is TiₓM1ₐNb_{y}M2_{b}O_{z}M3_{c}, and M3 is the fluorine. Therefore, the chemical structure of the niobium-titanium composite oxide can be adjusted to the optimal level to further increase the inserted number, the insertion and extraction rate and the reaction stability of the lithium ion by doping the fluorine element in the niobium-titanium composite oxide, which is favorable for achieving the best energy density, charge and discharge rate and charge and discharge safety of the negative electrode.

According to the battery of the present disclosure, when the niobium-titanium composite oxide is TiₓM1ₐNb_{y}M2_{b}O_{z}M3_{c}, the following condition can be satisfied: 0.80 ≤ x ≤ 1.20. Therefore, by limiting the titanium content of the constituent elements of the niobium-titanium composite oxide, the niobium-titanium composite oxide produces the more stable chemical structure, further avoiding the structural damage to the negative electrode during the charging and discharging. Furthermore, the following condition can be satisfied: 0.90 ≤ x ≤ 1.10. Furthermore, the following condition can be satisfied: 0.95 ≤ x ≤ 1.05. Furthermore, the following condition can be satisfied: 0.98 ≤ x ≤ 1.02.

According to the battery of the present disclosure, when the niobium-titanium composite oxide is TiₓM1ₐNb_{y}M2_{b}O_{z}M3_{c}, the following condition can be satisfied: 1.80 ≤ y ≤ 2.20. Therefore, by limiting the niobium content of the constituent elements of the niobium-titanium composite oxide, the niobium-titanium composite oxide produces the more stable chemical structure, further avoiding the structural damage to the negative electrode during the charging and discharging. Furthermore, the following condition can be satisfied: 1.90 ≤ y ≤ 2.10. Furthermore, the following condition can be satisfied: 1.95 ≤ y ≤ 2.05. Furthermore, the following condition can be satisfied: 1.98 ≤ y ≤ 2.02.

According to the battery of the present disclosure, when the niobium-titanium composite oxide is TiₓM1ₐNb_{y}M2_{b}O_{z}M3_{c}, the following condition can be satisfied: 6.80 ≤ z ≤ 7.20. Therefore, by limiting the oxygen content of the constituent elements of the niobium-titanium composite oxide, the niobium-titanium composite oxide produces the more stable chemical structure, further avoiding the structural damage to the negative electrode during the charging and discharging. Furthermore, the following condition can be satisfied: 6.90 ≤ z ≤ 7.10. Furthermore, the following condition can be satisfied: 6.95 ≤ z ≤ 7.05. Furthermore, the following condition can be satisfied: 6.98 ≤ z ≤ 7.02.

According to the battery of the present disclosure, when the niobium-titanium composite oxide is TiₓM1ₐNb_{y}M2_{b}O_{z}M3_{c}, the following condition can be satisfied: 2.95 ≤ z/y. Therefore, by limiting the oxygen-niobium ratio of the constituent elements of the niobium-titanium composite oxide, the niobium-titanium composite oxide produces the stable chemical structure, avoiding the structural damage to the negative electrode during the charging and discharging. Furthermore, the following condition can be satisfied: 3.00 ≤ z/y. Furthermore, the following condition can be satisfied: 3.10 ≤ z/y. Furthermore, the following condition can be satisfied: 3.20 ≤ z/y ≤ 4.00. Furthermore, the following condition can be satisfied: 3.30 ≤ z/y ≤ 3.80. Furthermore, the following condition can be satisfied: 3.40 ≤ z/y ≤ 3.60.

According to the battery of the present disclosure, when a weight percentage of the lithium-manganese oxide in the positive electrode is PIm, the following condition can be satisfied: 90.00% ≤ PIm ≤ 98.00%. Therefore, the optimal amount of the lithium-manganese oxide used as the non-auxiliary material is achieved by designing the optimal ratio of the lithium-manganese oxide in the positive electrode, which is favorable for balancing the reaction efficiency and the stability of the positive electrode. Furthermore, the following condition can be satisfied: 92.00% ≤ PIm ≤ 96.00%. Furthermore, the following condition can be satisfied: 93.00% ≤ PIm ≤ 95.00%.

According to the battery of the present disclosure, the positive electrode further includes a positive electrode adhesive, when a weight percentage of the positive electrode adhesive in the positive electrode is PCb, the following condition can be satisfied: 0% < PCb ≤ 5.00%. Therefore, the adhesion effect of the positive electrode material is increased by designing the optimal ratio of the positive electrode adhesive in the positive electrode, which is favorable for improving the stability of the positive electrode. Furthermore, the following condition can be satisfied: 1.00% ≤ PCb ≤ 4.50%. Furthermore, the following condition can be satisfied: 1.50% ≤ PCb ≤ 4.00%. Furthermore, the following condition can be satisfied: 1.80% ≤ PCb ≤ 3.50%. Furthermore, the following condition can be satisfied: 2.50% ≤ PCb ≤ 3.00%.

According to the battery of the present disclosure, the positive electrode further includes a positive electrode conductive additive, when a weight percentage of the positive electrode conductive additive in the positive electrode is PCa, the following condition can be satisfied: 0% < PCa ≤ 8.00%. Therefore, the transfer rate of the electrons and ions in the positive electrode can be increased by designing the optimal ratio of the positive electrode conductive additive in the positive electrode, which is favorable for improving the reaction efficiency of the positive electrode active material. Furthermore, the following condition can be satisfied: 1.00% ≤ PCa ≤ 7.00%. Furthermore, the following condition can be satisfied: 1.50% ≤ PCa ≤ 6.00%. Furthermore, the following condition can be satisfied: 2.00% ≤ PCa ≤ 5.00%. Furthermore, the following condition can be satisfied: 2.50% ≤ PCa ≤ 4.00%. Furthermore, the following condition can be satisfied: 3.00% ≤ PCa ≤ 3.50%.

According to the battery of the present disclosure, when a weight percentage of the niobium-titanium composite oxide in the negative electrode is Ptn, the following condition can be satisfied: 80.00% ≤ Ptn ≤ 99.00%. Therefore, the optimal amount of the niobium-titanium composite oxide used as the non-auxiliary material is achieved by designing the optimal ratio of the niobium-titanium composite oxide in the negative electrode, which is favorable for balancing the reaction efficiency and the stability of the negative electrode. Furthermore, the following condition can be satisfied: 85.00% ≤ Ptn ≤ 98.00%. Furthermore, the following condition can be satisfied: 88.00% ≤ Ptn ≤ 95.00%. Furthermore, the following condition can be satisfied: 92.00% ≤ Ptn ≤ 93.00%.

According to the battery of the present disclosure, the negative electrode further includes a negative electrode adhesive, when a weight percentage of the negative electrode adhesive in the negative electrode is PAb, the following condition can be satisfied: 0% < PAb ≤ 8.00%. Therefore, the adhesion effect of the negative electrode material is increased by designing the optimal ratio of the negative electrode adhesive in the negative electrode, which is favorable for improving the stability of the negative electrode. Furthermore, the following condition can be satisfied: 1.00% ≤ PAb ≤ 7.00%. Furthermore, the following condition can be satisfied: 2.00% ≤ PAb ≤ 6.00%. Furthermore, the following condition can be satisfied: 3.00% ≤ PAb ≤ 5.50%. Furthermore, the following condition can be satisfied: 3.50% ≤ PAb ≤ 5.00%. Furthermore, the following condition can be satisfied: 4.00% ≤ PAb ≤ 4.50%.

According to the battery of the present disclosure, the negative electrode further includes a negative electrode conductive additive, when a weight percentage of the negative electrode conductive additive in the negative electrode is PAa, the following condition can be satisfied: 0% < PAa ≤ 8.00%. Therefore, the transfer rate of the electrons and ions in the negative electrode can be increased by designing the optimal ratio of the negative electrode conductive additive in the negative electrode, which is favorable for improving the reaction efficiency of the negative electrode active material. Furthermore, the following condition can be satisfied: 1.00% ≤ PAa ≤ 7.00%. Furthermore, the following condition can be satisfied: 1.50% ≤ PAa ≤ 6.00%. Furthermore, the following condition can be satisfied: 2.00% ≤ PAa ≤ 5.00%. Furthermore, the following condition can be satisfied: 2.50% ≤ PAa ≤ 4.00%. Furthermore, the following condition can be satisfied: 3.00% ≤ PAa ≤ 3.50%.

According to the battery of the present disclosure, the electrolyte includes a carbonate ester, when a weight percentage of the carbonate ester in the electrolyte is PEc, the following condition can be satisfied: 80.00% ≤ PEc ≤ 95.00%. Therefore, by designing the optimal ratio of the carbonate ester in the electrolyte, it is favorable for improving the dissolving effect of each component in the electrolyte. Furthermore, the following condition can be satisfied: 86.00% ≤ PEc ≤ 92.00%. Furthermore, the following condition can be satisfied: 88.00% ≤ PEc ≤ 89.00%.

According to the battery of the present disclosure, the electrolyte includes a metal salt, when a weight percentage of the metal salt in the electrolyte is PEm, the following condition can be satisfied: 5.00% ≤ PEm ≤ 15.00%. Therefore, the conductivity of the electrolyte can be improved by designing the optimal ratio of the metal salt in the electrolyte, which is favorable for improving the reaction rate of the positive electrode and the negative electrode. Furthermore, the following condition can be satisfied: 7.00% ≤ PEm ≤ 13.00%. Furthermore, the following condition can be satisfied: 9.00% ≤ PEm ≤ 11.00%. Furthermore, the following condition can be satisfied: 9.50% ≤ PEm ≤ 10.50%.

According to the battery of the present disclosure, the electrolyte includes a carbonate ester, the carbonate ester includes an ethylene carbonate and a dimethyl carbonate, when a ratio of the ethylene carbonate to the dimethyl carbonate is Red, the following condition can be satisfied: 0 < Red ≤ 1.00. Therefore, by designing the optimal ratio of the ethylene carbonate to the dimethyl carbonate, the electrolyte generates the best melting point, the viscosity and the dielectric constant, which is favorable for improving the reaction efficiency of the battery within the operating temperature range. Furthermore, the following condition can be satisfied: 0.20 ≤ Red ≤ 0.80. Furthermore, the following condition can be satisfied: 0.40 ≤ Red ≤ 0.60. Furthermore, the following condition can be satisfied: 0.45 ≤ Red ≤ 0.55.

According to the battery of the present disclosure, when a negative electrode/positive electrode capacitance ratio of the battery is Rac, the following condition can be satisfied: 1.00 ≤ Rac ≤ 1.50. Therefore, the additional buffer space is provided for the lithium ion at the negative electrode to avoid overcharging from causing the instability at the negative electrode to generate the lithium dendrites by designing the optimal negative electrode/positive electrode capacitance ratio, which is favorable for improving the safety of the battery. Furthermore, the following condition can be satisfied: 1.10 ≤ Rac ≤ 1.30. Furthermore, the following condition can be satisfied: 1.15 ≤ Rac ≤ 1.25.

According to the battery of the present disclosure, when a working voltage of the battery is WV, the following condition can be satisfied: 1.20 V ≤ WV ≤ 1.70 V. Therefore, the battery can be made to meet with the operating voltage of the low-voltage electronic product by satisfying the working voltage of the battery. Furthermore, the following condition can be satisfied: 1.30 V ≤ WV ≤ 1.60 V. Furthermore, the following condition can be satisfied: 1.35 V ≤ WV ≤ 1.50 V.

According to the battery of the present disclosure, when a fully charged voltage of the battery is FV, the following condition can be satisfied: 1.00 V ≤ FV ≤ 3.00 V. Therefore, the voltage is avoided from exceeding the load limit of the low-voltage electronic product by limiting the fully charged voltage of the battery. Furthermore, the following condition can be satisfied: 1.20 V ≤ FV ≤ 2.80 V. Furthermore, the following condition can be satisfied: 1.50 V ≤ FV ≤ 2.50 V. Furthermore, the following condition can be satisfied: 1.60 V ≤ FV ≤ 2.10 V. Furthermore, the following condition can be satisfied: 1.70 V ≤ FV ≤ 1.90 V. Furthermore, the following condition can be satisfied: 1.75 V ≤ FV ≤ 1.85 V.

According to the battery of the present disclosure, when a fully discharged voltage of the battery is EV, the following condition can be satisfied: EV < 1.20 V. Therefore, the low-charge battery has a voltage lower than the operating voltage of the electronic product to avoid the over-discharge of the battery by limiting the fully discharged voltage of the battery, which is favorable for improving the service life of the battery. Furthermore, the following condition can be satisfied: 0 V < EV ≤ 1.10 V. Furthermore, the following condition can be satisfied: 0.50 V ≤ EV ≤ 1.05 V.

According to the battery of the present disclosure, when a cycle number of a residual capacity of the battery less than 80% of a maximum capacity of the battery is CN80, the following condition can be satisfied: 30 ≤ CN80. Therefore, the battery is ensured that reaches the cycle number for the daily use by meeting the cycle number of the residual capacity of the battery less than 80% of the maximum capacity of the battery. Furthermore, the following condition can be satisfied: 40 ≤ CN80. Furthermore, the following condition can be satisfied: 50 ≤ CN80 < ∞.

According to the battery of the present disclosure, when a residual capacity of the battery at a 10th charge-discharge cycle is R10C, the following condition can be satisfied: 80.00% ≤ R10C. Therefore, the degradation rate of the battery can be initially reduced by limiting the residual capacity of the battery at the 10th charge-discharge cycle. Furthermore, the following condition can be satisfied: 82.50% ≤ R10C. Furthermore, the following condition can be satisfied: 85.00% ≤ R10C. Furthermore, the following condition can be satisfied: 87.50% ≤ R10C. Furthermore, the following condition can be satisfied: 90.00% ≤ R10C. Furthermore, the following condition can be satisfied: 92.00% ≤ R10C ≤ ∞.

According to the battery of the present disclosure, when a residual capacity of the battery at a 30th charge-discharge cycle is R30C, the following condition can be satisfied: 75.00% ≤ R30C. Therefore, the degradation rate of the battery can be further reduced by limiting the residual capacity of the battery at the 30th charge-discharge cycle. Furthermore, the following condition can be satisfied: 77.50% ≤ R30C. Furthermore, the following condition can be satisfied: 80.00% ≤ R30C. Furthermore, the following condition can be satisfied: 82.50% ≤ R30C. Furthermore, the following condition can be satisfied: 85.00% ≤ R30C. Furthermore, the following condition can be satisfied: 87.50% ≤ R30C. Furthermore, the following condition can be satisfied: 90.00% ≤ R30C ≤ ∞.

According to the battery of the present disclosure, when a residual capacity of the battery at a 50th charge-discharge cycle is R50C, the following condition can be satisfied: 70.00% ≤ R50C. Therefore, the long-term degradation of the battery can be effectively improved by limiting the residual capacity of the battery at the 50th charge-discharge cycle. Furthermore, the following condition can be satisfied: 72.50% ≤ R50C. Furthermore, the following condition can be satisfied: 75.00% ≤ R50C. Furthermore, the following condition can be satisfied: 77.50% ≤ R50C. Furthermore, the following condition can be satisfied: 80.00% ≤ R50C ≤ ∞.

According to the battery of the present disclosure, the metal salt includes a lithium salt. Therefore, the required lithium ion is provided to the positive electrode and the negative electrode of the battery for the reduction-oxidation by using the metal salt including the lithium salt, which is favorable for helping the battery to charge and discharge normally during the long-term use.

According to the present disclosure, the electrode can be a positive electrode or a negative electrode.

According to the present disclosure, the positive electrode can include a positive electrode active material and a positive electrode auxiliary material.

According to the present disclosure, the positive electrode active material refers that the material having the reduction-oxidation ability and can generate the reduction-oxidation potential during the charging and discharging of the battery.

According to the present disclosure, the positive electrode active material can include a lithium metal or a lithium composite metal oxide including at least one metal element, such as lithium iron phosphate (LiFePO₄), lithium manganese oxide (Li_{0.33}MnO₂, Li_{0.66}MnO₂, LiMnO₂, LiMn₂O₄), lithium cobalt oxide (LiCoO₂), lithium nickel oxide (LiNiO₂), lithium nickel cobalt oxide (LiNiCoO₂), lithium nickel manganese oxide (LiNiMnO₄), lithium manganese cobalt oxide (LiCoMnO₂, LiCoMnO₄), lithium nickel manganese cobalt oxide (LiNiCoMnO₂, LiNiCoMnO₄; NCM), or a combination thereof. The aforementioned lithium composite metal oxide can include various different oxidation states. The aforementioned lithium composite metal oxide can be a single crystal or a polycrystalline structure. For example, the lithium nickel cobalt oxide can be a single crystal lithium nickel cobalt oxide or a polycrystalline lithium nickel cobalt oxide.

According to the present disclosure, the lithium-manganese oxide can be LiᵢMnⱼOₖ, wherein i can be different values, such as 0.10, 0.20, 0.30, 0.33, 0.40, 0.50, 0.60, 0.66, 0.70, 0.75, 0.80, 0.90 or 1.00, etc.

According to the present disclosure, the negative electrode can include a negative electrode active material and a negative electrode auxiliary material.

According to the present disclosure, the negative electrode active material refers that the material having the reduction-oxidation ability and can generate the reduction-oxidation potential during the charging and discharging of the battery.

According to the present disclosure, the negative electrode active material can include the niobium-titanium composite oxide, lithium-titanium composite oxide, niobium-tungsten composite oxide. The aforementioned composite oxide refers that the oxide containing two or more elements.

According to the present disclosure, the niobium-titanium composite oxide can include a non-doped niobium-titanium composite oxide and a doped niobium-titanium composite oxide. A constitution of the non-doped niobium-titanium composite oxide includes a niobium element, a titanium element and an oxygen element. A constitution of the doped niobium-titanium composite oxide at least includes the niobium element, the titanium element, the oxygen element and at least one doped element. The niobium-titanium composite oxide includes a variety of possible chemical structures, which can be represented by the following chemical formula:

TiₓM1ₐNb_{y}M2_{b}O_{z}M3_{c};

wherein M1, M2 and M3 are the doped elements, and 0 < x, 0 < y, 0 < z, 0 ≤ a, 0 ≤ b, 0 ≤ c. The change of the structure can be achieved by adjusting the doped elements or the doped ratio. Furthermore, at least one of the auxiliary materials can be further selected to cover or fill a surface or pores of the niobium-titanium composite oxide. The niobium-titanium composite oxide can include a first doped element, a second doped element and a third doped element. The aforementioned doped element can include the metal element or the non-metal element. The metal element can include Group 1 elements, Group 2 elements, Group 3 elements, Group 4 elements, Group 5 elements, Group 6 elements, Group 7 elements, Group 8 elements, Group 9 elements, Group 10 elements, Group 11 elements, Group 12 elements, Group 13 elements, Group 14 elements, Group 15 elements, Group 16 elements. The non-metal element can include Group 13 elements, Group 14 elements, Group 15 elements, Group 16 elements, Group 17 elements. The aforementioned Group 17 elements can include fluorine, chlorine, bromine, iodine and astatine. The crystal structure of the niobium-titanium composite oxide can be a cubic crystal system, a monoclinic crystal system, an orthorhombic crystal system, a ReO₃-type lattice or a layered structure, etc.

According to the present disclosure, the auxiliary material can be the positive electrode auxiliary material or the negative electrode auxiliary material. The positive electrode auxiliary material can include the polymer, the metal, the alloy, the non-metal oxide, the metal oxide, the fluoride, the organic compound, the electrode electrolyte, the conductive additive, the adhesive and the additive. The negative electrode auxiliary material can include the polymer, the metal, the alloy, the non-metal oxide, the metal oxide, the fluoride, the organic compound, the electrode electrolyte, the conductive additive, the adhesive and the additive.

According to the present disclosure, the conductive additive can be a positive electrode conductive additive or a negative electrode conductive additive. The positive electrode conductive additive can include the graphite, the conductive graphite (KS6, SFG6), the graphene, the acetylene black, the Ketjenblack, the carbon black (Super P), the carbon nanotube (CNT), the vapor grown carbon fiber (VGCF), the carbon microbead, the carbon fiber, the hard carbon, the soft carbon, the aluminium powder, the nickel powder, the titanium dioxide, the potassium hexatitanate (PHT), or a combination thereof. The negative electrode conductive additive can include the graphite, the conductive graphite (KS6, SFG6), the graphene, the acetylene black, the Ketjenblack, the carbon black (Super P), the carbon nanotube (CNT), the vapor grown carbon fiber (VGCF), the carbon microbead, the carbon fiber, the hard carbon, the soft carbon, the aluminium powder, the nickel powder, the titanium dioxide, the potassium hexatitanate (PHT), or a combination thereof.

According to the present disclosure, the adhesive can be a positive electrode adhesive or a negative electrode adhesive. The positive electrode adhesive can include poly(1,1-difluoroethylene) (PVDF), styrene-butadiene rubber (SBR), poly(methylene) (PE), poly(ethenol) (PVA), poly(1-ethenylpyrrolidin-2-one) (PVP), poly(1-methylethylene) (PP), poly(1-acrylonitrile) (PAN), carboxymethyl cellulose (CMC), carboxymethyl cellulose-Li (CMC-Li), poly(1,1,2,2-tetrafluoroethylene) (PTFE), ethylene propylene diene monomer (EPDM), hypalon polyethlene rubber (CSM), or alginic acid made of the mono alduronic acid by linear polymerization. The aforementioned poly(1,1-difluoroethylene) can include PVDF1800, PVDF1810, PVDF5130 and PVDF7200, etc. The negative electrode adhesive can include poly(1,1-difluoroethylene) (PVDF), styrene-butadiene rubber (SBR), poly(methylene) (PE), poly(ethenol) (PVA), poly(1-ethenylpyrrolidin-2-one) (PVP), poly(1-methylethylene) (PP), poly(1-acrylonitrile) (PAN), carboxymethyl cellulose (CMC), carboxymethyl cellulose-Li (CMC-Li), poly(1,1,2,2-tetrafluoroethylene) (PTFE), ethylene propylene diene monomer (EPDM), hypalon polyethlene rubber (CSM), or alginic acid made of the mono alduronic acid by linear polymerization. The aforementioned poly(1,1-difluoroethylene) can include PVDF1800, PVDF1810, PVDF5130 and PVDF7200, etc.

According to the present disclosure, the lithium supplement material can include stabilized Li metal powder (SLMP; 97% lithium+3% lithium carbonate (Li₂CO₃)), lithium nitride (Li₃N), lithium oxide (Li₂O), lithium foil, lithium metal sheet, n-butyllithium (BuLi), lithium iodide (Lil), lithium-rich lithium nickel oxide (Li₂NiO₂), lithium oxalate (Li₂C₂O₄), and lithium ferrite (Li₅FeO₄).

According to the present disclosure, the negative electrode/positive electrode capacitance ratio (A/C ratio) refers that the ratio of the capacitance of the negative electrode active material to the capacitance of the positive electrode active material. The calculation formula is Σ (theoretical capacity of each negative electrode active material × weight of each negative electrode active material) / Σ (theoretical capacity of each positive electrode active material × weight of each positive electrode active material).

According to the present disclosure, the electrode piece can be manufactured by the methods of coating on a single layer or double layers, a vacuum coating or a composite structure.

According to the present disclosure, the weight of the electrode does not include the weight of the current collector and the weight of the lithium supplement material.

According to the present disclosure, the thickness of the electrode can be obtained by measuring the thickness of the electrode piece and then deducting the thickness of the current collector and the thickness of the lithium supplement material.

According to the present disclosure, the density of the electrode can be obtained by cutting a circular electrode piece with a diameter of 14 mm, measuring the weight of the electrode piece and then deducting the weight of the current collector and the weight of the lithium supplement material. Then, the thickness of the electrode piece and the area of the cutting circle are measured so as to obtain the volume, and the weight is divided by the volume to obtain the density of the electrode.

According to the present disclosure, the resistance of the electrode can be measured by the four-point probes resistance meter. The distance between any two of the probes adjacent thereto is 1.5 cm. During measuring, the sample under test will be lay flatted first, and the probe will contact the surface of the sample under test. The closest distance between any probe on the surface and the boundary of the sample under test should be larger than 7.5 cm.

According to the present disclosure, the electrolyte can include the liquid electrolyte, the colloidal (semi-solid) electrolyte or the solid electrolyte. The liquid electrolyte refers that the electrolyte having the fluidity, which can include the metal salt, the additive and the organic solvent, wherein the proportion of the organic solvent is greater than that of the additive. The organic solvent and the additive used as the liquid electrolyte can be mixed physically, or at least one monomer of the organic solvent or the additive can be selected as the polymerization precursor. The solid electrolyte refers that the electrolyte without the fluidity, which can include the organic electrolyte and the inorganic electrolyte. The organic electrolyte meets the definition of the organic compound, and the inorganic electrolyte meets the definition of the inorganic compound. The inorganic electrolyte can include the sulfide electrolyte, the oxide electrolyte, the halide electrolyte, the hydride electrolyte, and the hydroxide electrolyte. The constituent element of the sulfide electrolyte includes the sulfur. The constituent element of the oxide electrolyte includes the oxygen but not includes the sulfur. The constituent element of the halide electrolyte includes the halide but not includes the sulfur. The constituent element of the hydride electrolyte includes the hydrogen but not includes the sulfur. The organic electrolyte can include the polymer electrolyte. The colloidal electrolyte refers that the electrolyte having the fluidity and the viscosity, which can include the metal salt, the organic solvent, the additive, the organic electrolyte and the inorganic electrolyte.

According to the present disclosure, the metal salt can include a lithium salt. The lithium salt can include the inorganic lithium acid salt, such as lithium hexafluorophosphate (LiPF₆), lithium tetrafluoroborate (LiBF₄), lithium hexafluorobismuthate (LiBiF₆), lithium hexafluoroarsenate (LiAsF₆), lithium perchlorate (LiClO₄), lithium bis(oxalato)borate (LiC₄BO₈), lithium bis(trifluoromethanesulfonyl)amino (LiTFSI), lithium bis(fluorosulfonyl)imine (LiFSI), lithium nitrate (LiNO₃), lithium gallium chloride (LiGaCl₄), etc. The lithium salt can include fluorine-containing lithium sulfonate, such as lithium trifluoromethanesulfonate (LiCF₃SO₃), LiN(C₂F₅SO₂)₂, lithium bis(trifluoromethylsulfonyl)amino (LiN(CF₃SO₂)₂), LiC(CF₃SO₂)₃, etc. The lithium salt can include LiBF₂(C₂O₄) (also known LiDFOB), LiB(C₂O₄)₂ (also known LiBOB), or the lithium salt can include a combination thereof. The aforementioned lithium salt can include various different oxidation states.

According to the present disclosure, the organic solvent can include the carbonate ester, the carboxylic ester, the ether, the sulfur-containing compound, or a combination thereof. The aforementioned organic solvent can also be used as the additive.

According to the present disclosure, the additive can include the carbonate ester, the lactide, the ether group-containing cyclic compound, the aromatic compound, the phosphorus-containing compound, the boron-containing compound, the inorganic oxide, or a combination thereof. The additive with a proper amount is added, it is favorable for enhancing the efficacy of the battery. For example, improving the composition of the SEI membrane, enhancing the efficacy under high temperature and high voltage, enhancing the transmission ability of the ions, reducing the impedance of the electrolyte, increasing the stability of cycles, stabilizing the integrity of the positive electrode and the negative electrode, increasing the electrochemical stability, etc.

According to the present disclosure, the structure of the organic solvent including the polymerizable olefin group, which can be used as the monomer of the second structural precursor. For example, it can be 2H-1,3-dioxol-2-one (vinylene carbonate; VC), 4-vinyl-1,3-dioxolan-2-one (vinylethylene carbonate; VEC), 1,3-dithiole-2-thione (vinylene trithiocarbonate), 2,5-dihydrothiophene-1,1-dioxide, 1-ethenylsulfonylethene, prop-1-ene-1,3-sultone, the additive of ether group-containing cyclic compound, or the additive of aromatic compound.

According to the present disclosure, the carbonate ester can include a compound in which some or all of the hydrogens of the hydroxyl group in the carbonic acid molecule are substituted by an alkyl group, and the carbonate ester can be divided to the cyclic carbonate ester and the linear carbonate ester. The linear carbonate ester can include dimethyl carbonate (DMC), diethyl carbonate (DEC), dipropyl carbonate (DPC), ethyl methyl carbonate (EMC), methyl propyl carbonate (MPC), ethyl propyl carbonate (EPC), and methyl 2,2,2-trifluoroethyl carbonate (FEMC). The cyclic carbonate ester can include 1,3-dioxolan-2-one (ethylene carbonate; EC), 4-methyl-1,3-dioxolan-2-one (propylene carbonate; PC), 1,3-dioxan-2-one (trimethylene carbonate; TMC), 4-ethyl-1,3-dioxolan-2-one (1,2-butylene carbonate), (4R,5S)-4,5-dimethyl-1,3-dioxolan-2-one (cis-2,3-butylene carbonate), 1,2-pentylene carbonate, 2,3-pentylene carbonate, 2H-1,3-dioxol-2-one (vinylene carbonate; VC), 4-vinyl-1,3-dioxolan-2-one (vinylethylene carbonate; VEC), 4-fluoro-1,3-dioxolan-2-one (fluoroethylene carbonate; FEC), trans-4,5-difluoro-1,3-dioxolan-2-one (difluoroethylene carbonate; DFEC), 1,3-dithiole-2-thione (vinylene trithiocarbonate), or a combination thereof.

According to the present disclosure, the carboxylic ester can include methyl acetate, ethyl acetate, propyl acetate, methyl propionate, ethyl propionate, propyl propionate, methyl butyrate, ethyl butyrate, lactone, or a combination thereof. The lactone can be further explained as containing a 1-oxacycloalkan-2-one structure, which refers that the compound including a hydroxyl group and a carboxylic acid, and the compound is condensed within the molecule so as to form a cyclic carboxylic ester monomer. According to the position of the hydroxyl group forming the ring and the number of carbon atoms in the ring, there can be many combinations, such as oxiran-2-one (α-acetolactone), oxetan-2-one (β-propiolactone), oxolan-2-one (y-butyrolactone), 5-methyloxolan-2-one (γ-valerolactone), oxan-2-on (σ-valerolactone), 5-ethyloxolan-2-one (γ-caprolactone), oxepan-2-one (ε-caprolactone), D-glucono-1,5-lactone (δ-gluconolactone), or a combination thereof.

According to the present disclosure, the ether can include oxolane (THF), 2-methyloxolane (2-MeTHF), 1,3-dioxolane (DOL), 4-methyl-1,3-dioxolane (4-MeDOL), dimethoxymethane (DMM), 1,2-dimethoxyethane (DME), 2,2-dimethoxypropane (DMP), 1,2-bis(2-cyanoethoxy)ethane (DENE), 1-methoxy-2-(2-methoxyethoxy)ethane (DG), or a combination thereof.

According to the present disclosure, the sulfur-containing compound can be divided into the sulfone group-containing compound (-(O=)S(=O)-) or the sulfonate ester compound (-SO₂O⁻). The sulfone group-containing compound can include 2,5-dihydrothiophene-1,1-dioxide and 1-ethenylsulfonylethene. The sulfonate ester compound can be further divided into mesylate (CH₃SO₂O⁻), trifluoromethanesulfonate (CF₃SO₂O⁻), p-toluenesulfonyl group (Tosyl), and can include 1-methylsulfonyloxyethane, methyl 4-methylbenzenesulfonate, oxathiolane 2,2-dione, prop-1-ene-1,3-sultone, 1,3,2-dioxathiane 2,2-dioxide, or a combination thereof.

According to the present disclosure, the current collector can be a substrate made of a metal foil or a conductive polymer, wherein the metal foil can be selected from aluminum, copper, titanium, nickel, tantalum, stainless steel, or alloys composed of the aforementioned metals.

According to the present disclosure, the battery can be classified as the primary battery or the secondary battery depending on the type. The primary battery can be the carbon-zinc battery, the alkaline battery, the nickel-cadmium battery or the lithium battery. The secondary battery can be the lead-acid battery, the nickel-cadmium battery, the nickel-hydride battery or the lithium ion battery.

According to the present disclosure, the lithium ion battery can be the high-voltage lithium-ion battery or the low-voltage lithium-ion battery. A fully charged voltage of the high-voltage lithium-ion battery can larger than 3 volts; a fully charged voltage of the low-voltage lithium-ion battery can less than or equal to 3 volts.

According to the present disclosure, the battery can be classified as the bipolar battery, the pouch battery, the cylindrical battery, the square battery or the button battery depending on the assembly structure.

According to the present disclosure, the fully charged voltage of the battery refers that the voltage charging at the constant current of 0.1 C until the battery reaches the fully charge.

According to the present disclosure, the fully discharged voltage of the battery refers that the voltage discharging at the constant current of 0.1 C until the battery is completely depleted.

According to the present disclosure, the working voltage of the battery refers that the voltage at the intersection of the charging curve and the discharging curve, which is plotted with capacitance on the horizontal axis and voltage on the vertical axis at the constant current of 0.1 C for charging and discharging.

According to the present disclosure, the maximum capacity refers that the capacity of the battery after it has been sold without any loss or degradation of capacity and is fully charged.

According to the present disclosure, the residual capacity refers that the percentage of the capacity in this cycle compared to the maximum capacity.

According to the present disclosure, the measurement values are all based on the initial state of the battery after assembly and commercial sale as the standard and the measurement conditions of the present disclosure is 1 atm, 25°C of temperature and 50% of humidity.

Each of the aforementioned features of the battery of the present disclosure can be utilized in various combinations for achieving the corresponding effects.

The present disclosure only shows some of the relevant arrangements, and that which is without the data or cannot be calculated are marked with "-" in the tables.

According to the above descriptions, the specific embodiments are given below with the experiment data so as to describe the present disclosure in detail.

### <Example 1>

The battery of Example 1 includes a positive electrode, a negative electrode and an electrolyte. The positive electrode includes a positive electrode active material, and the positive electrode active material includes a lithium-manganese oxide. The negative electrode includes a negative electrode active material, and the negative electrode active material includes a niobium-titanium composite oxide.

The detail data of the battery of Example 1 are shown in Table 1.

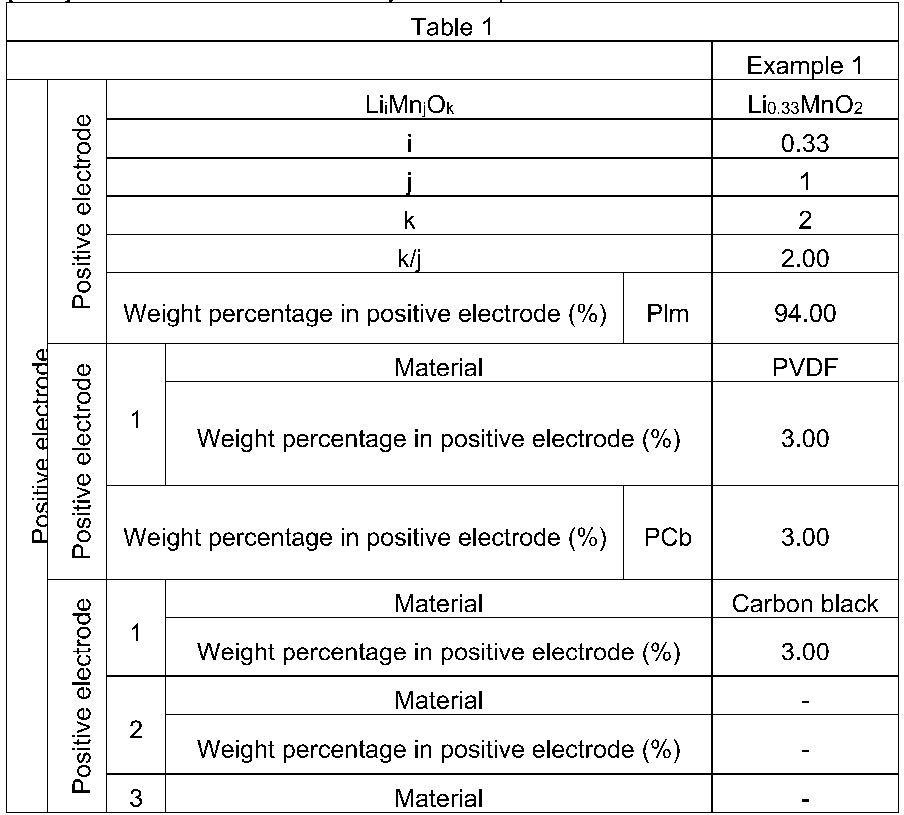

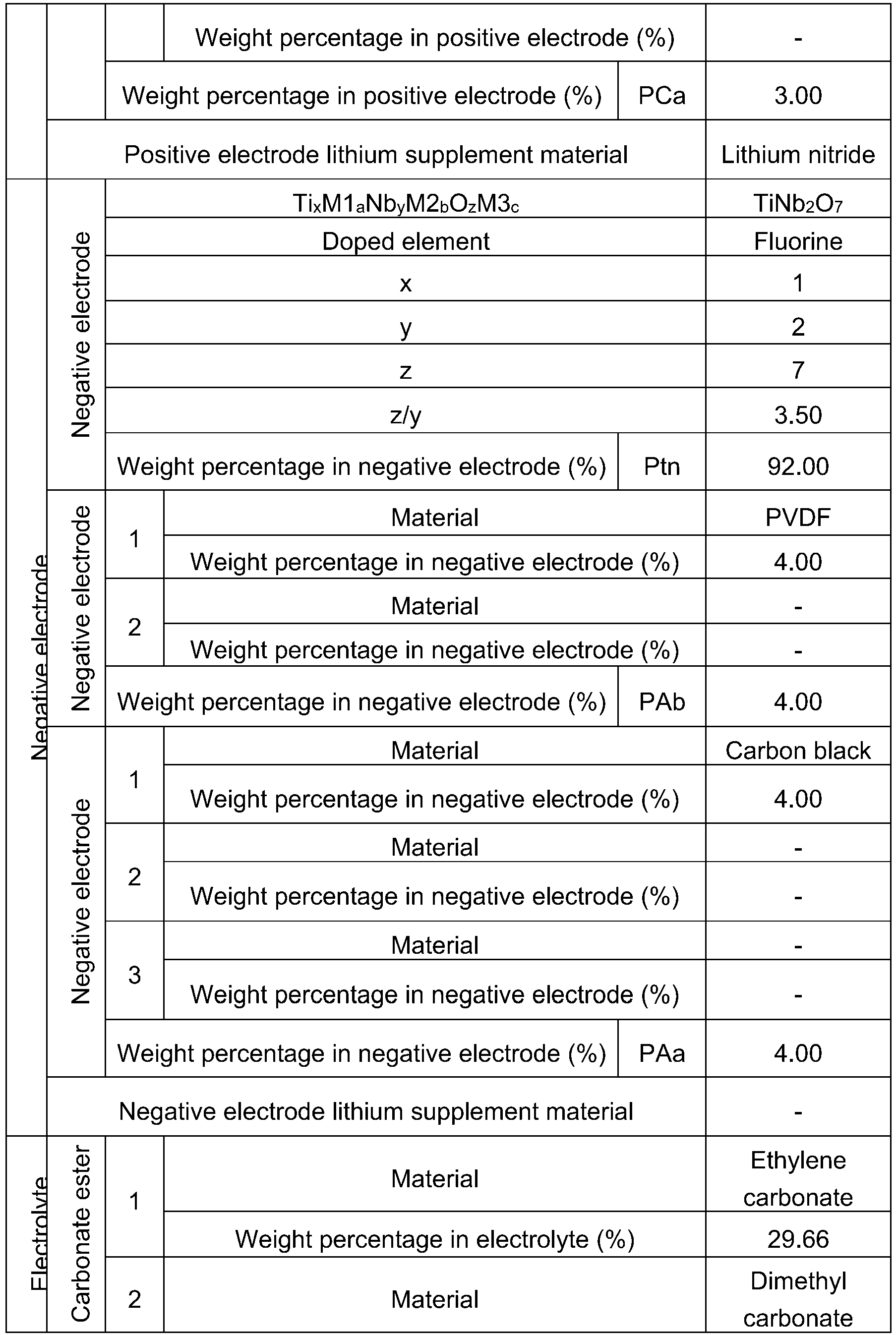

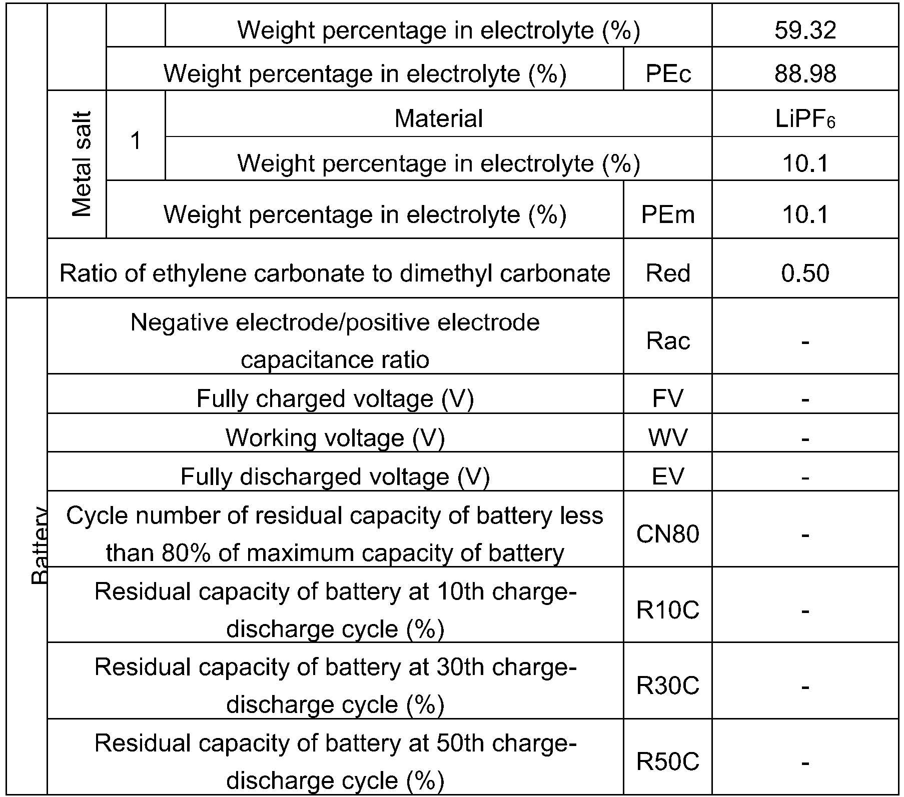

### <Example 2>

The battery of Example 2 includes a positive electrode, a negative electrode and an electrolyte. The positive electrode includes a positive electrode active material, and the positive electrode active material includes a lithium-manganese oxide. The negative electrode includes a negative electrode active material, and the negative electrode active material includes a niobium-titanium composite oxide.

The detail data of the battery of Example 2 are shown in Table 2.

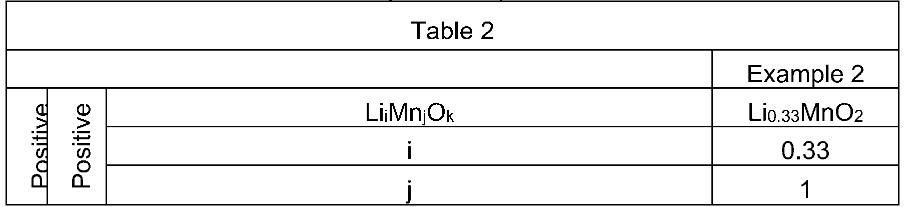

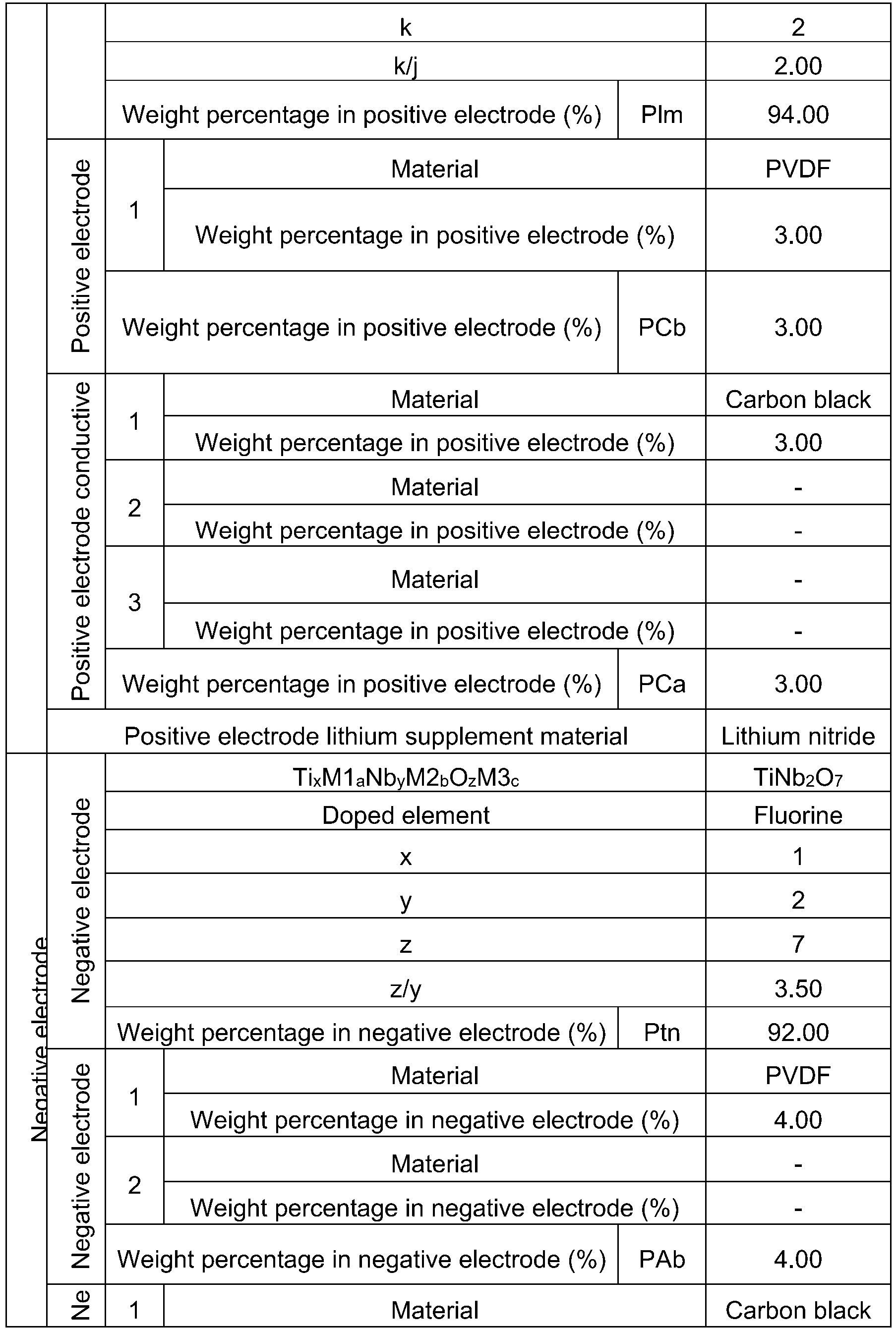

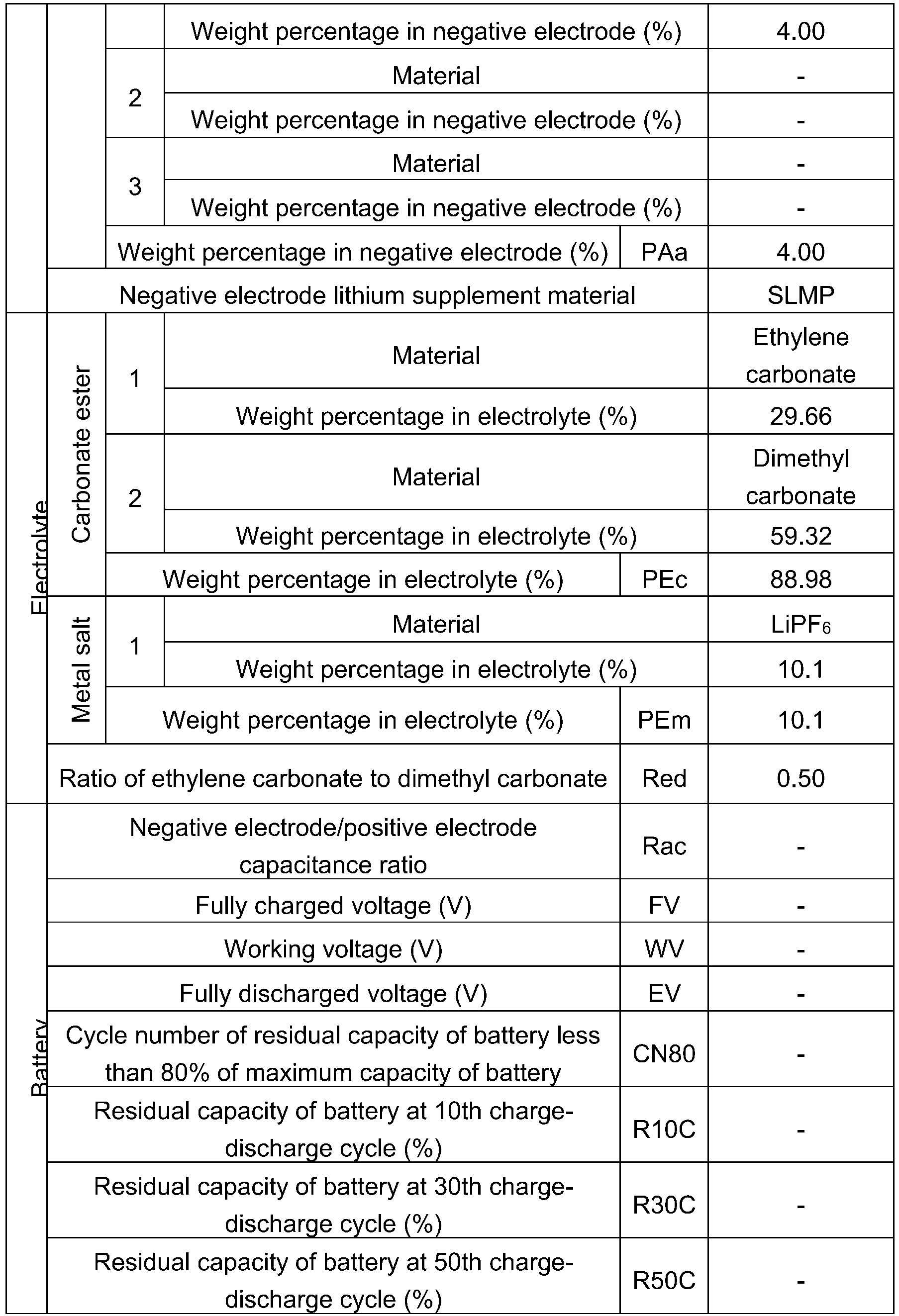

### <Example 3>

The battery of Example 3 includes a positive electrode, a negative electrode and an electrolyte. The positive electrode includes a positive electrode active material, and the positive electrode active material includes a lithium-manganese oxide. The negative electrode includes a negative electrode active material, and the negative electrode active material includes a niobium-titanium composite oxide.

The detail data of the battery of Example 3 are shown in Table 3.

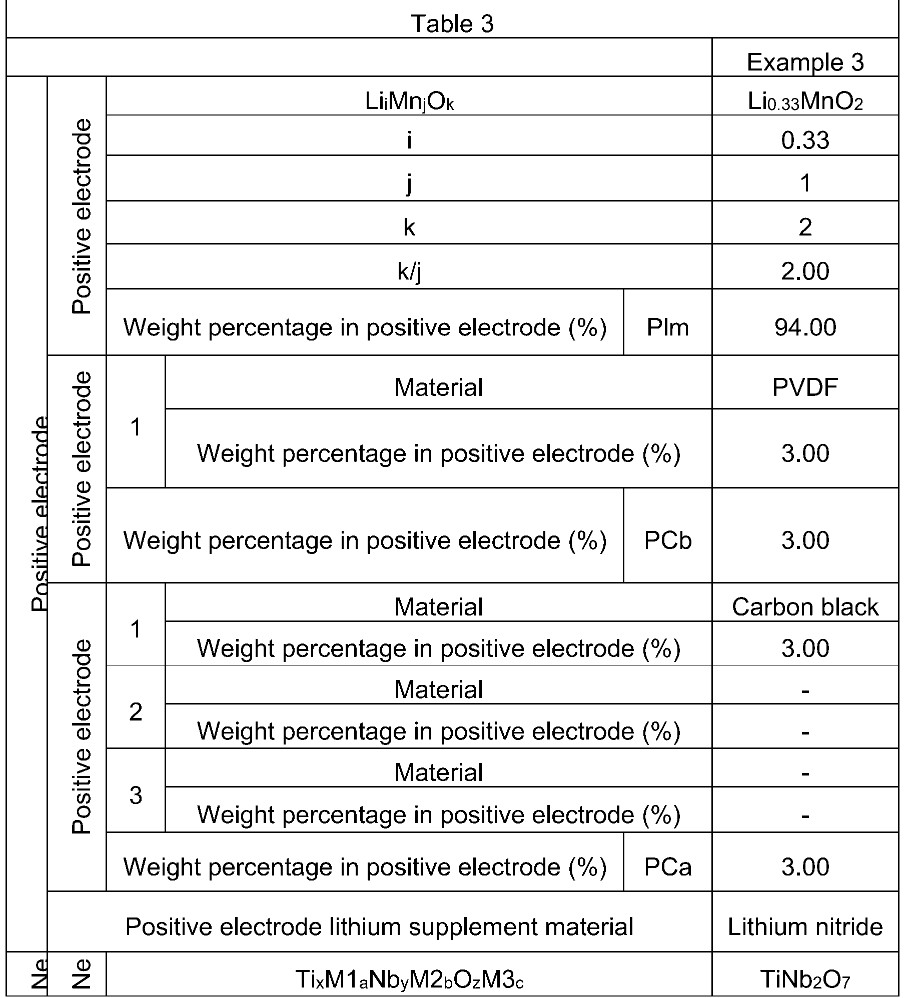

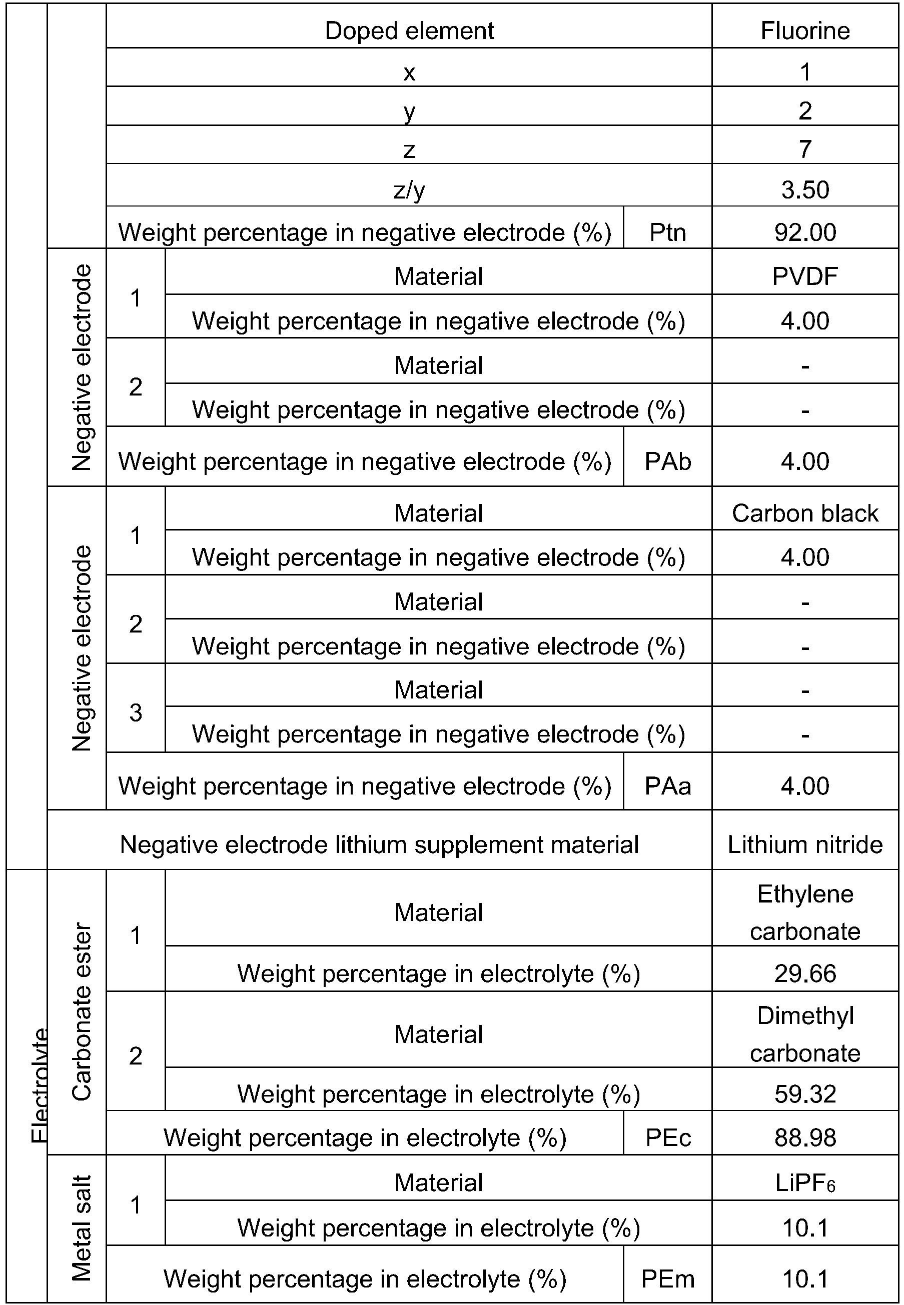

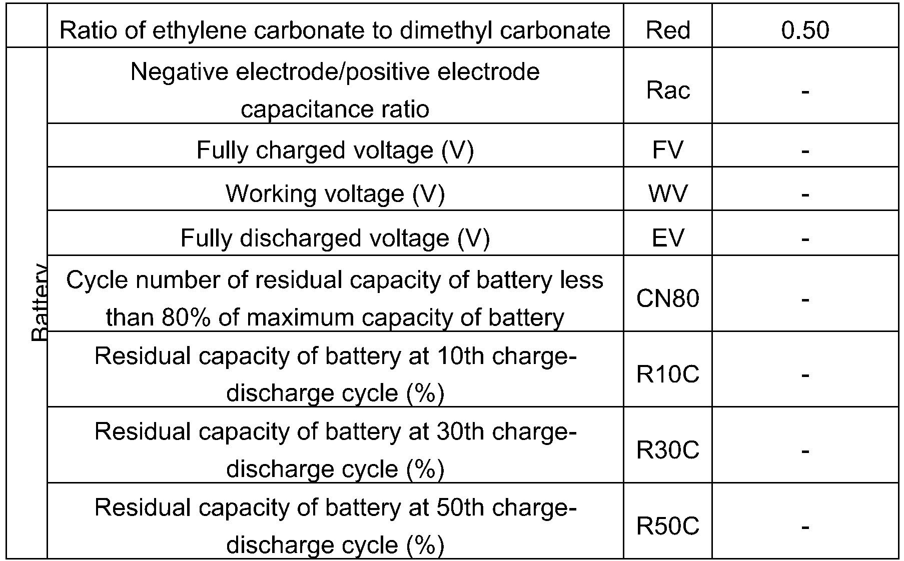

### <Example 4>

The battery of Example 4 includes a positive electrode, a negative electrode and an electrolyte. The positive electrode includes a positive electrode active material, and the positive electrode active material includes a lithium-manganese oxide. The negative electrode includes a negative electrode active material, and the negative electrode active material includes a niobium-titanium composite oxide.

The detail data of the battery of Example 4 are shown in Table 4.

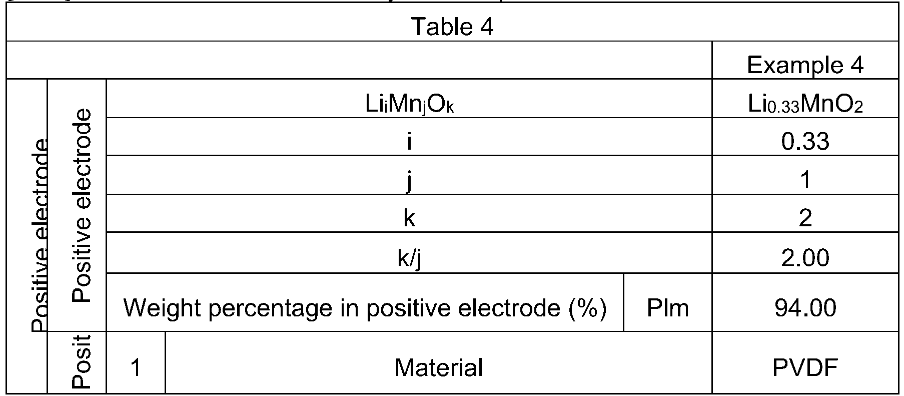

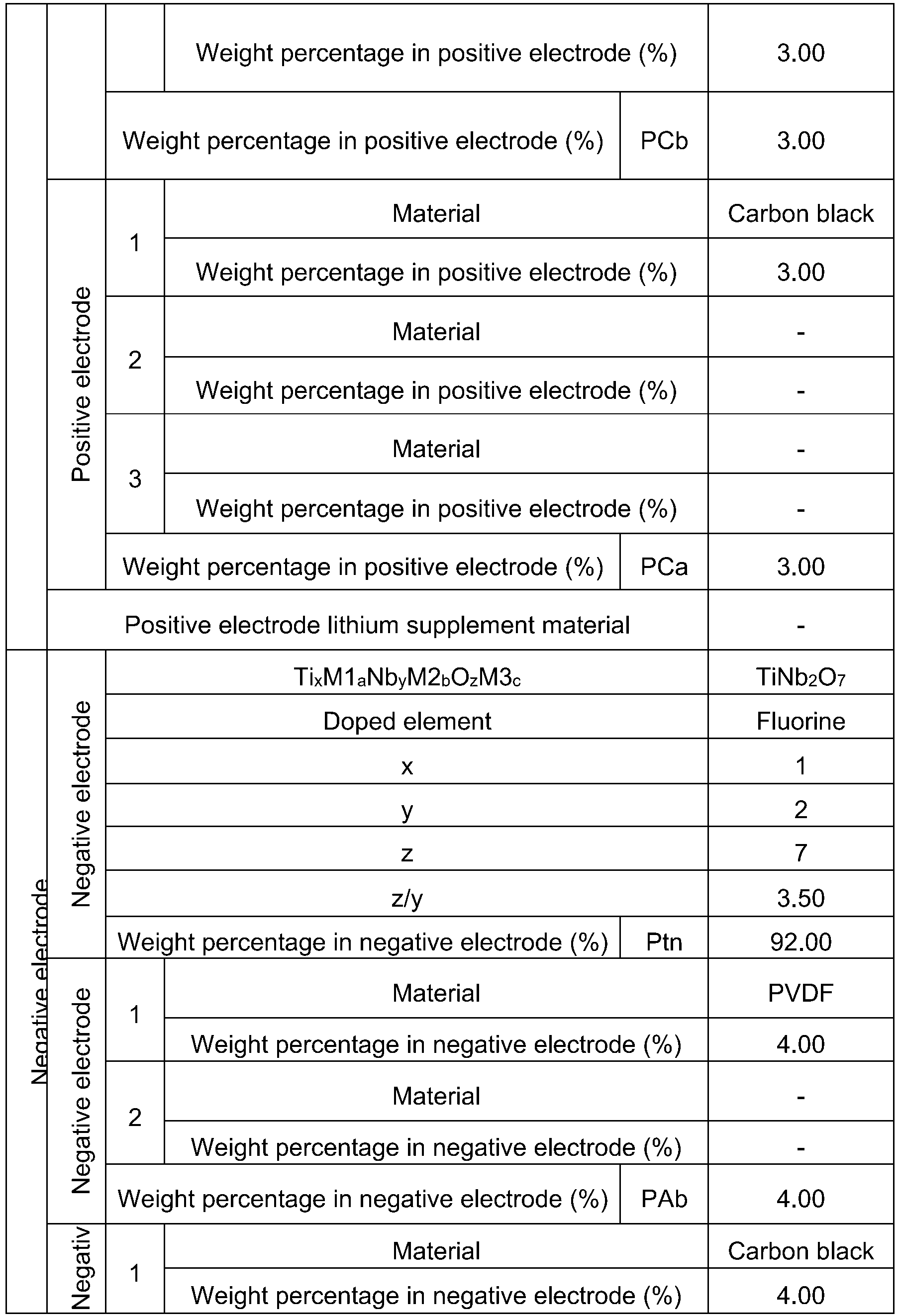

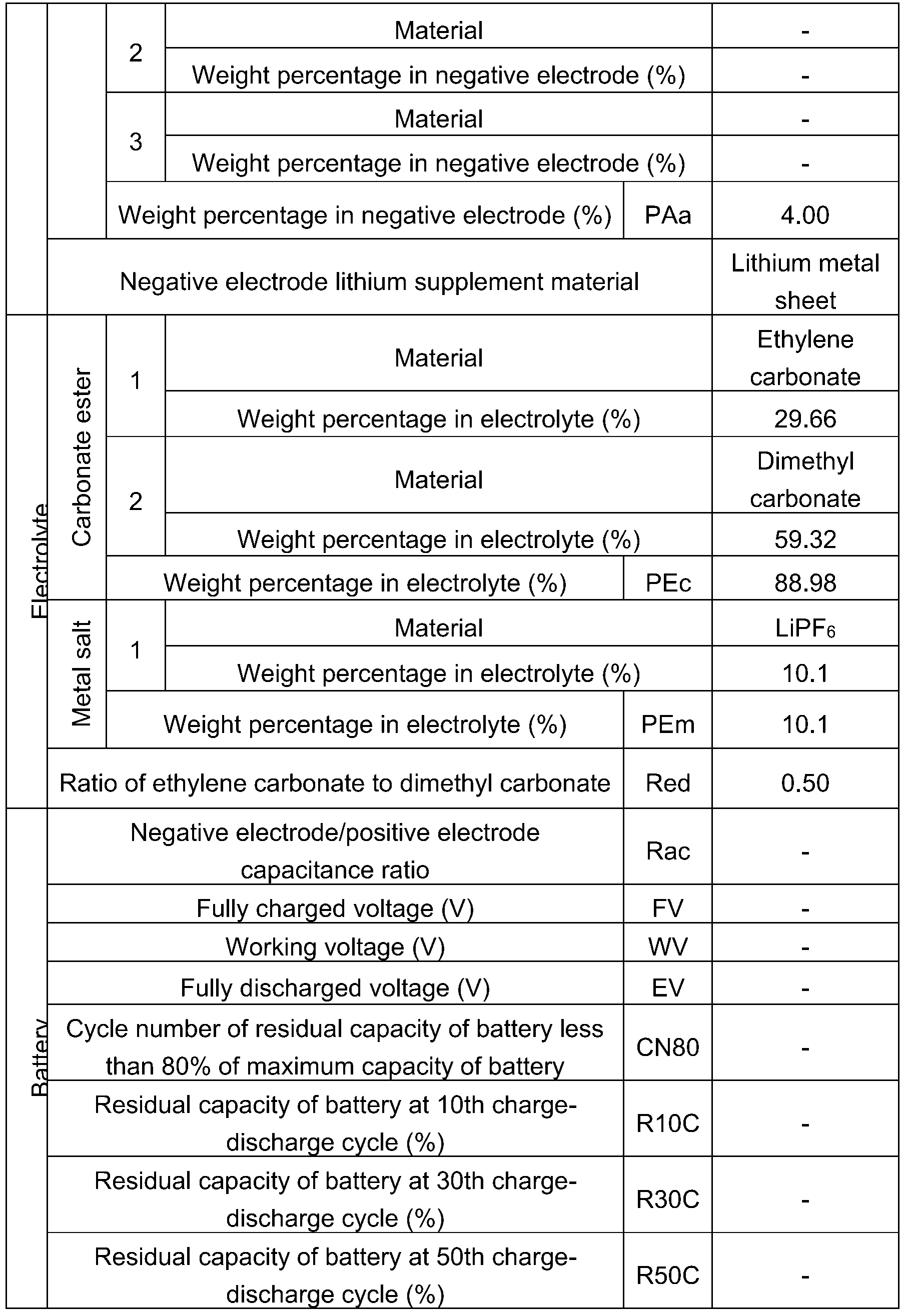

### <Example 5>

The battery of Example 5 includes a positive electrode, a negative electrode and an electrolyte. The positive electrode includes a positive electrode active material, and the positive electrode active material includes a lithium-manganese oxide. The negative electrode includes a negative electrode active material, and the negative electrode active material includes a niobium-titanium composite oxide.

The detail data of the battery of Example 5 are shown in Table 5.

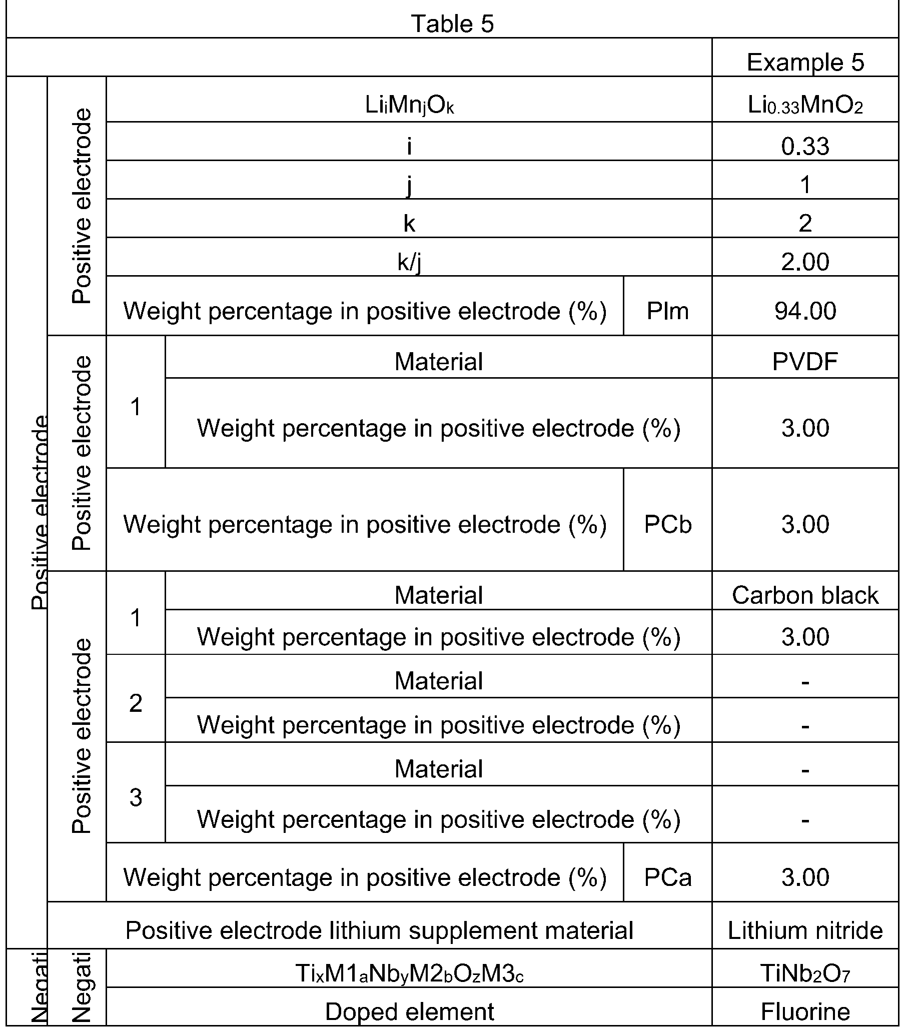

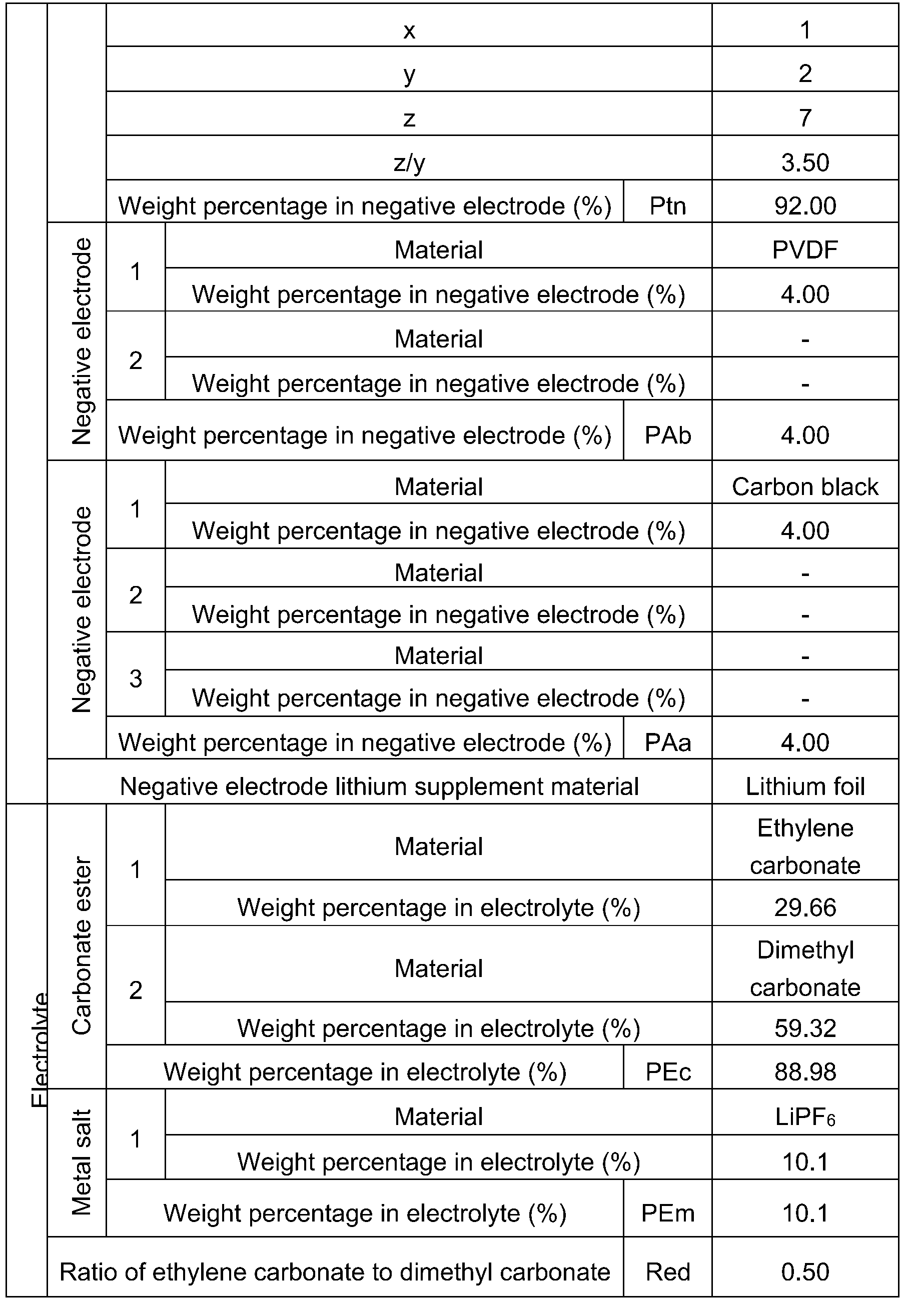

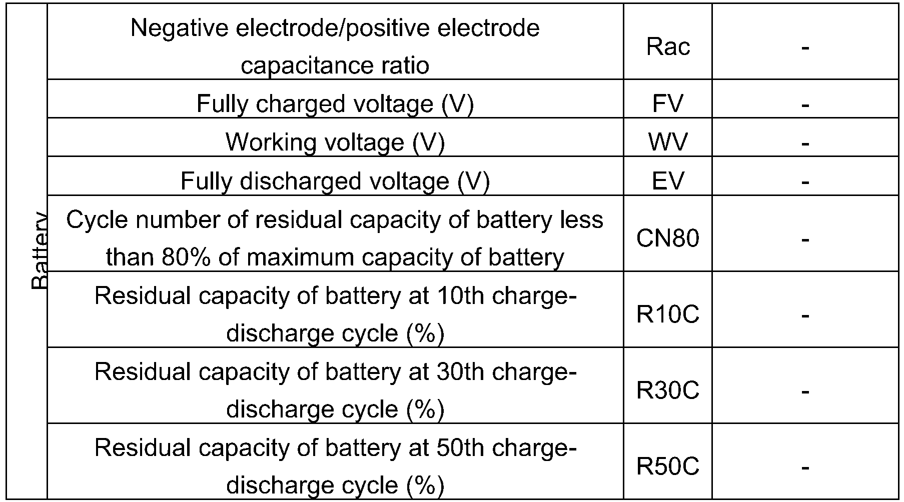

### <Example 6>

The battery of Example 6 includes a positive electrode, a negative electrode and an electrolyte. The positive electrode includes a positive electrode active material, and the positive electrode active material includes a lithium-manganese oxide. The negative electrode includes a negative electrode active material, and the negative electrode active material includes a niobium-titanium composite oxide.

The detail data of the battery of Example 6 are shown in Table 6.

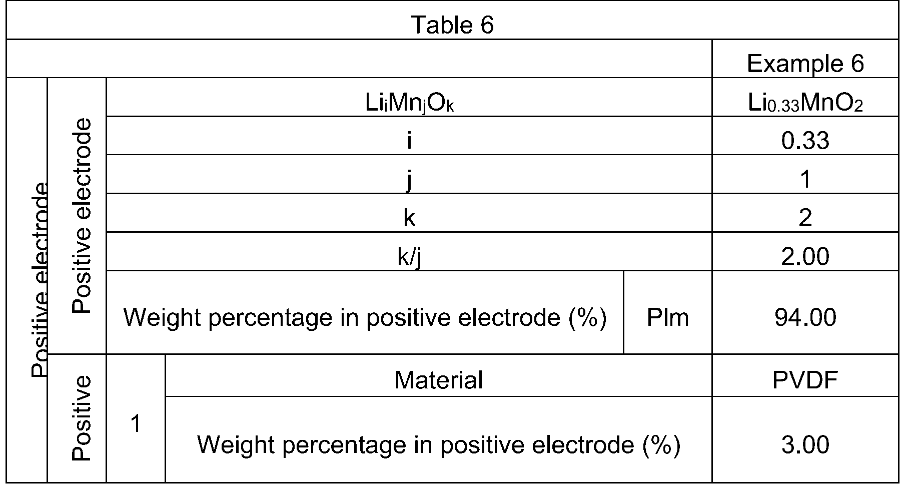

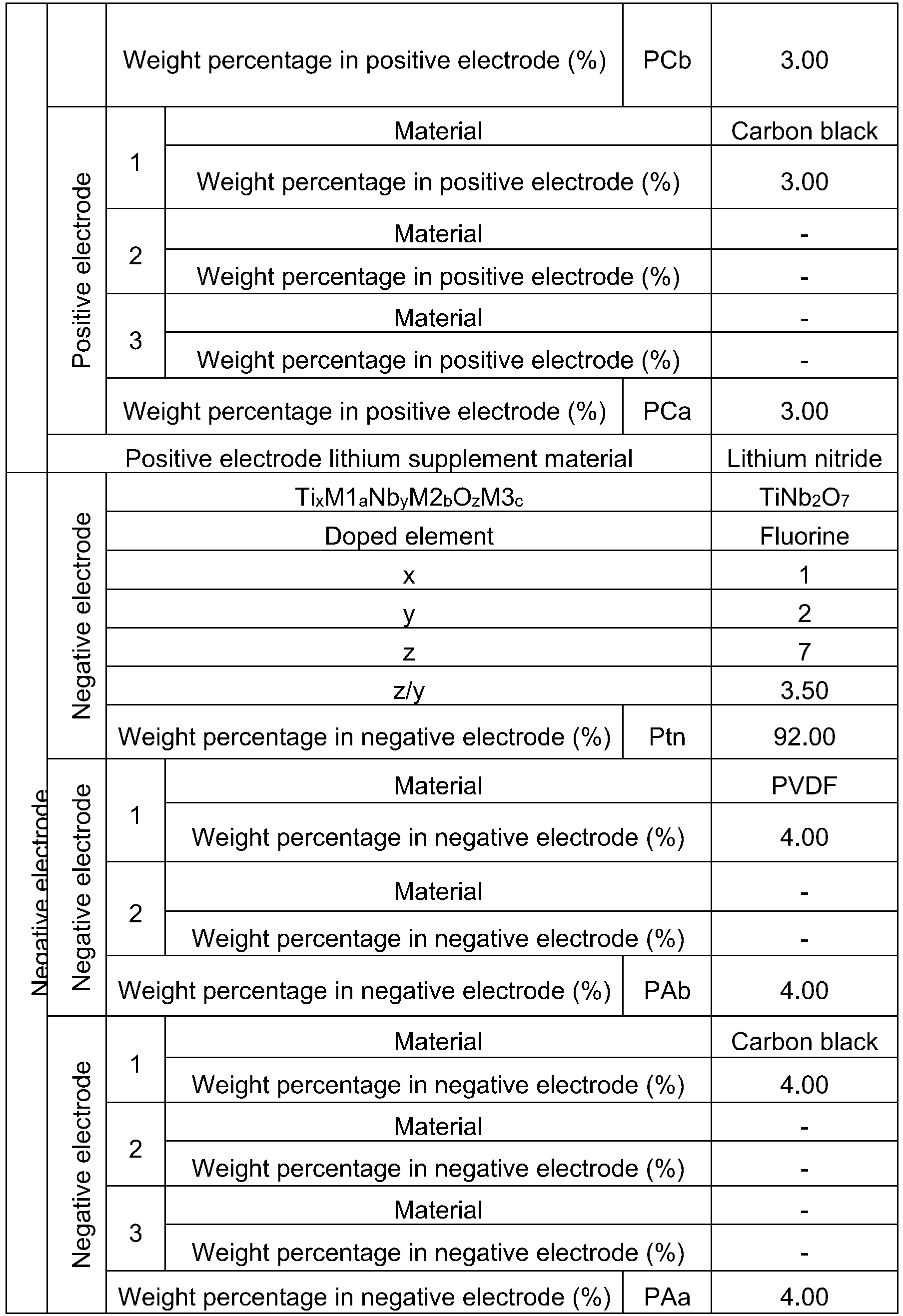

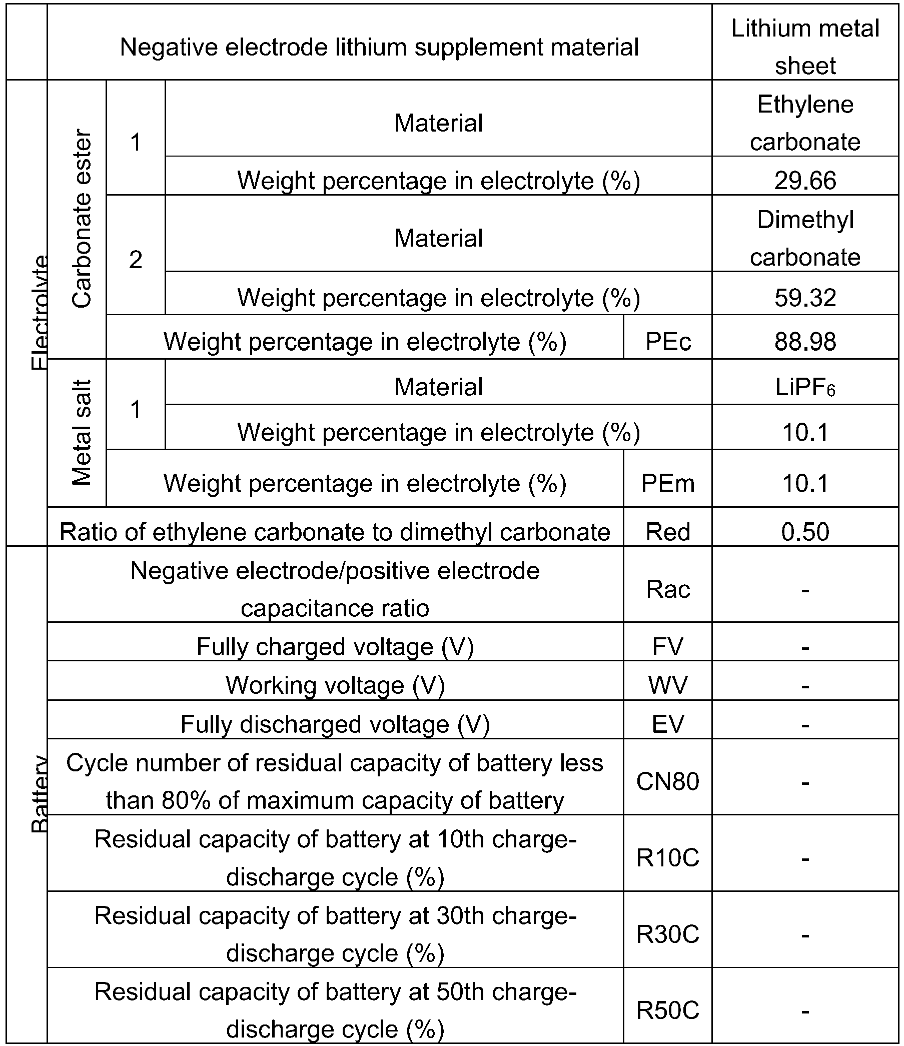

### <Example 7>

The battery of Example 7 includes a positive electrode, a negative electrode and an electrolyte. The positive electrode includes a positive electrode active material, and the positive electrode active material includes a lithium-manganese oxide. The negative electrode includes a negative electrode active material, and the negative electrode active material includes a niobium-titanium composite oxide.

The detail data of the battery of Example 7 are shown in Table 7.

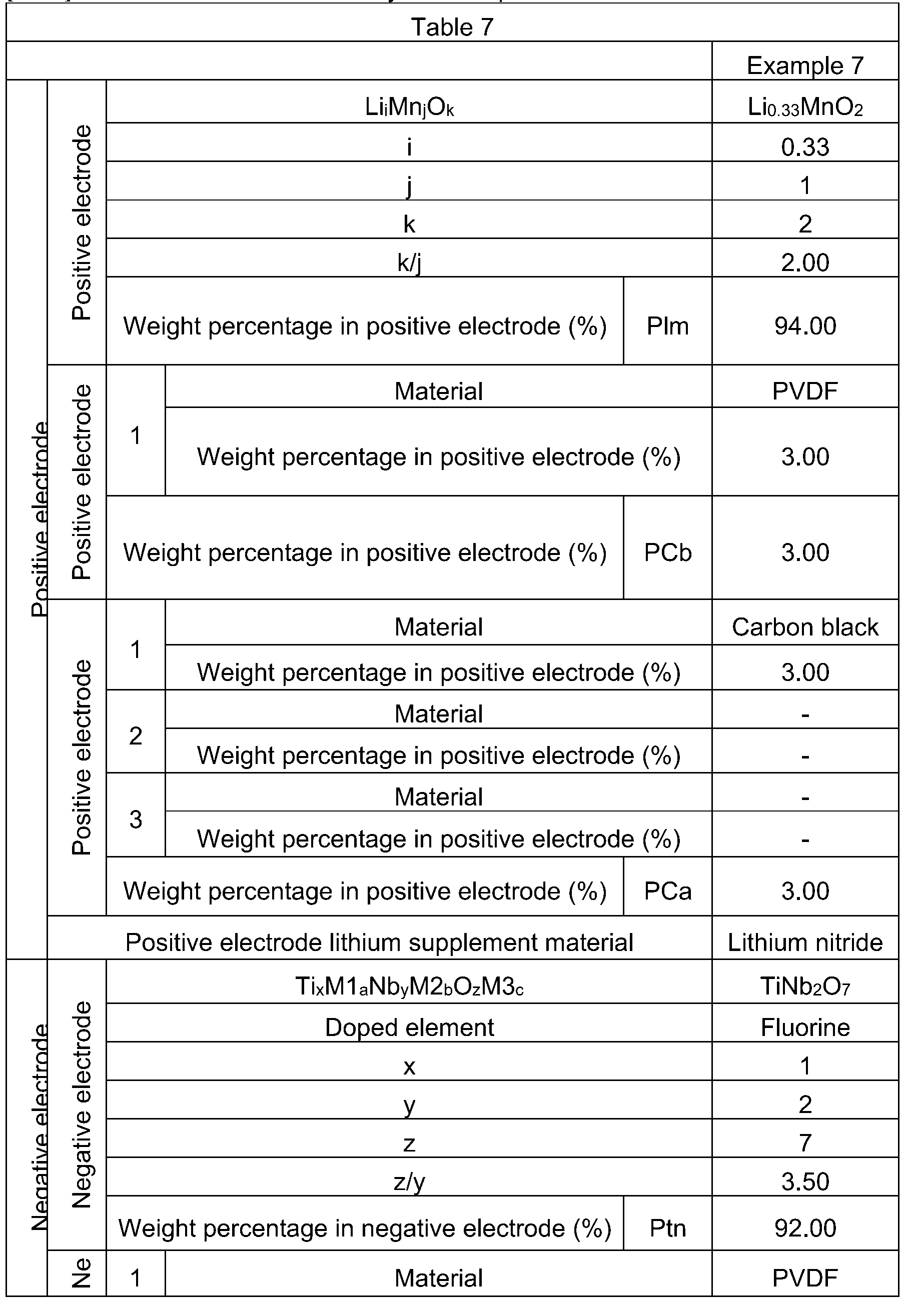

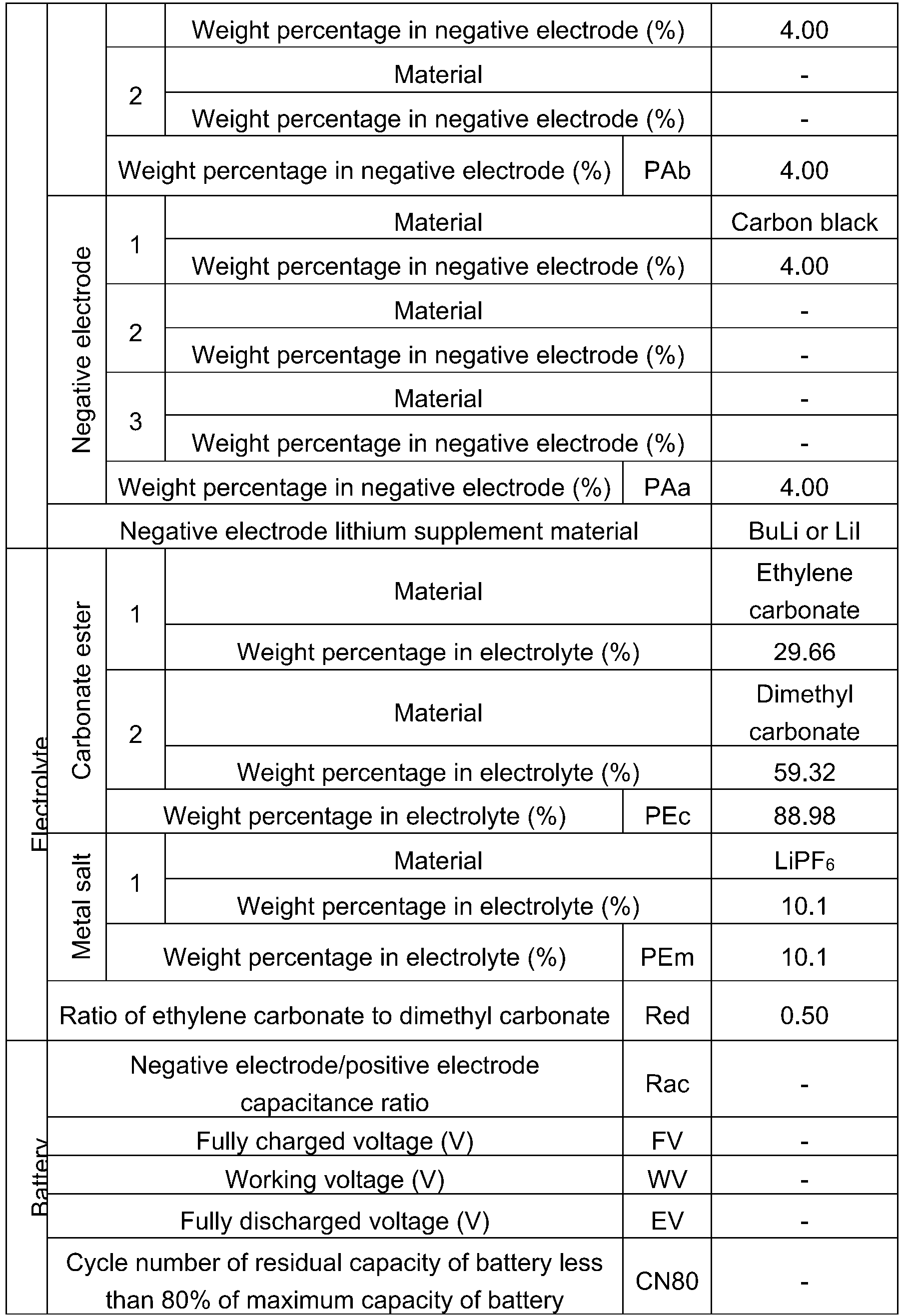

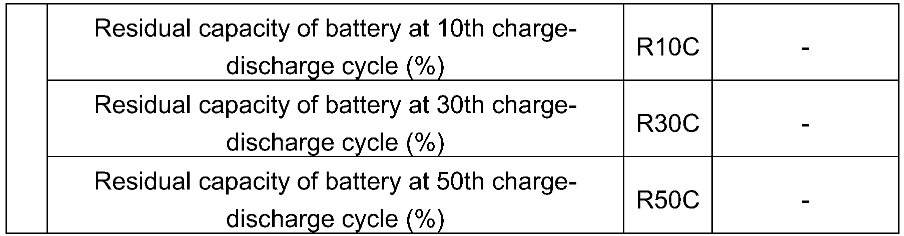

### <Example 8>

The battery of Example 8 includes a positive electrode, a negative electrode and an electrolyte. The positive electrode includes a positive electrode active material, and the positive electrode active material includes a lithium-manganese oxide. The negative electrode includes a negative electrode active material, and the negative electrode active material includes a niobium-titanium composite oxide.

The detail data of the battery of Example 8 are shown in Table 8.

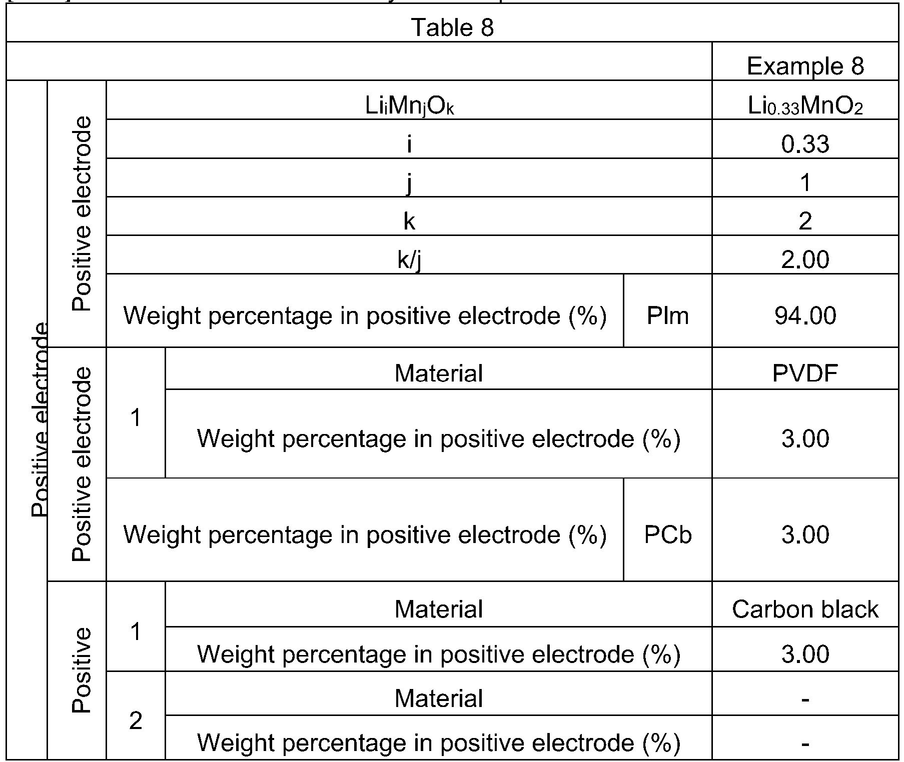

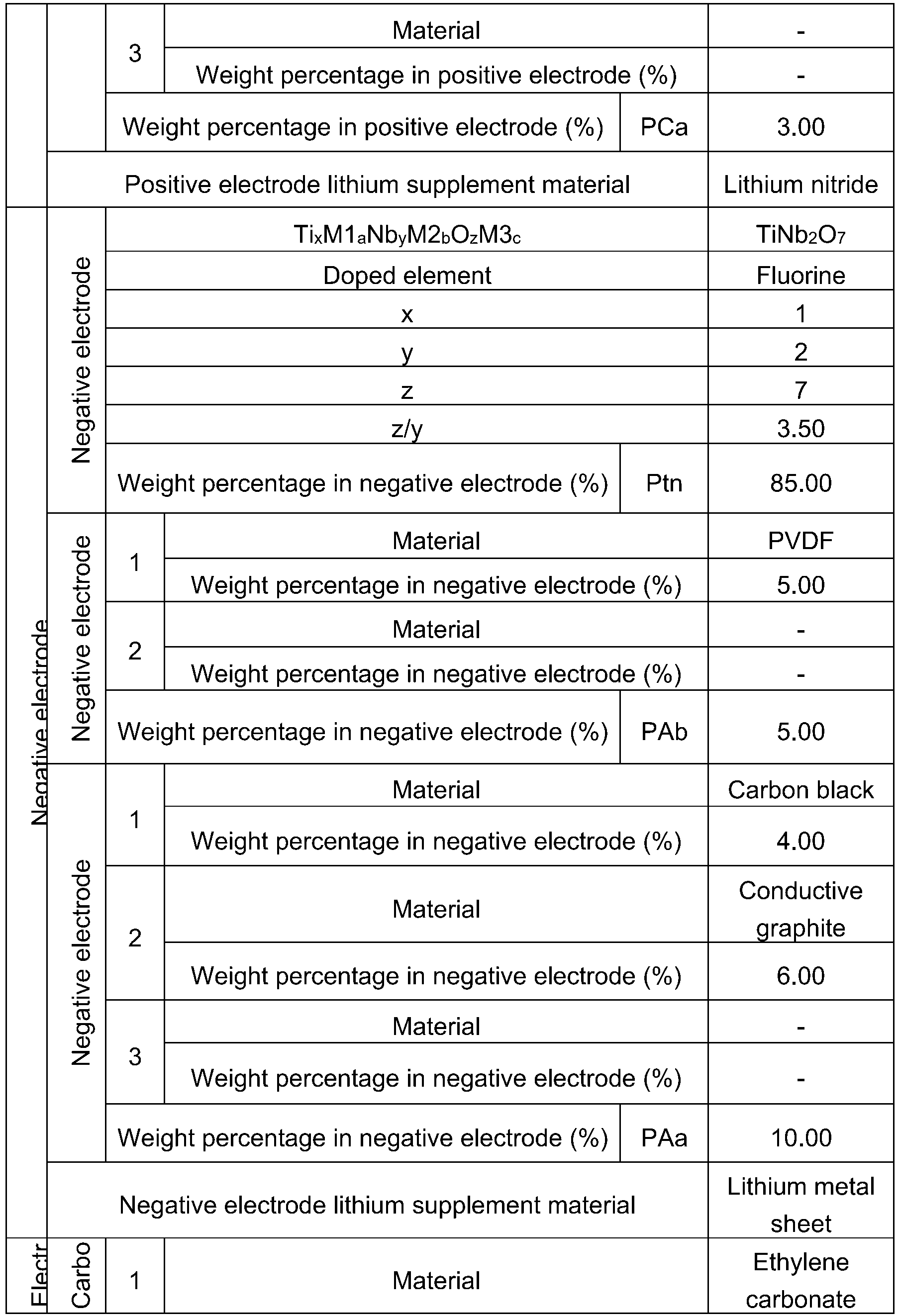

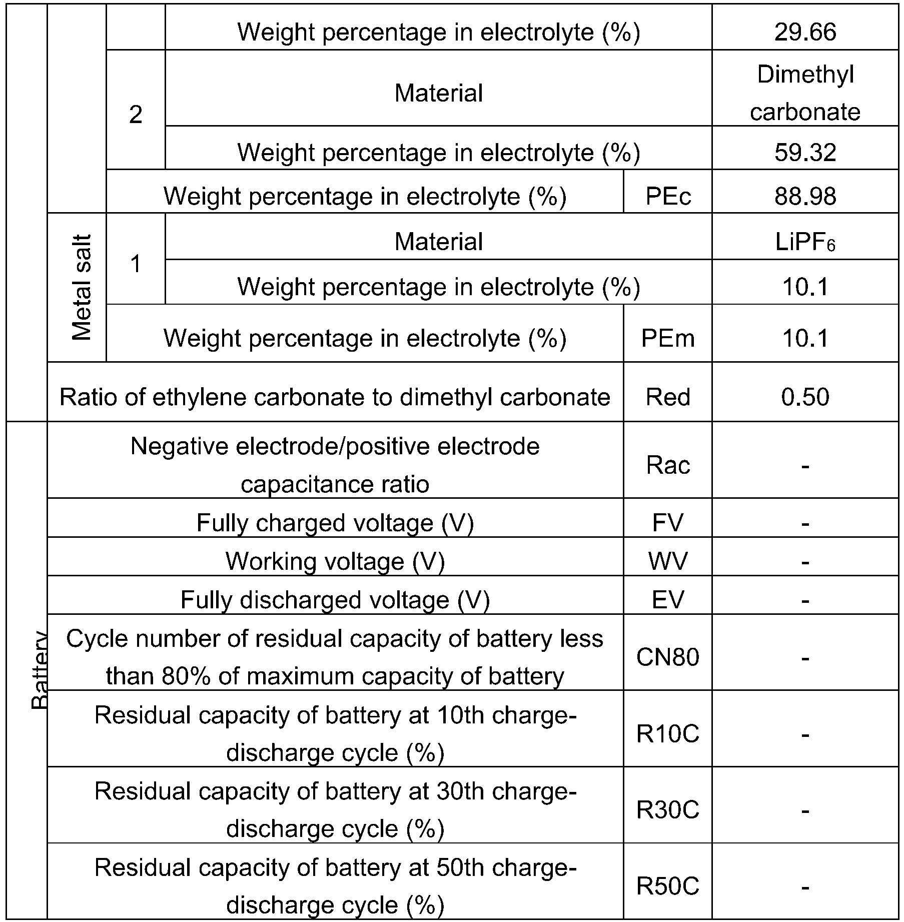

### <Example 9>

The battery of Example 9 includes a positive electrode, a negative electrode and an electrolyte. The positive electrode includes a positive electrode active material, and the positive electrode active material includes a lithium-manganese oxide. The negative electrode includes a negative electrode active material, and the negative electrode active material includes a niobium-titanium composite oxide.

Fig. 1 is a curved diagram of charging and discharging of the battery of Example 9, and the detail data of the battery of Example 9 are shown in Table 9.

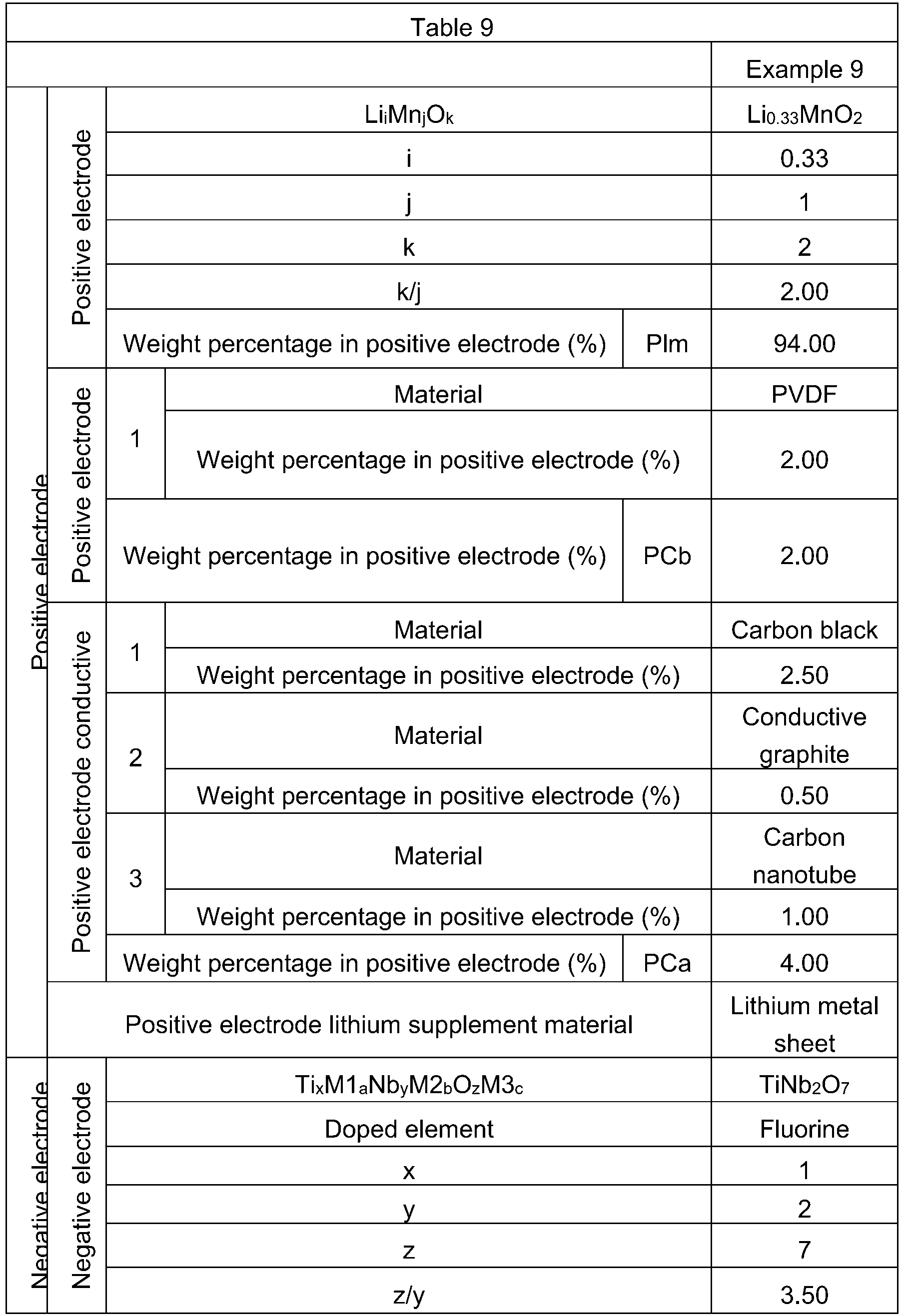

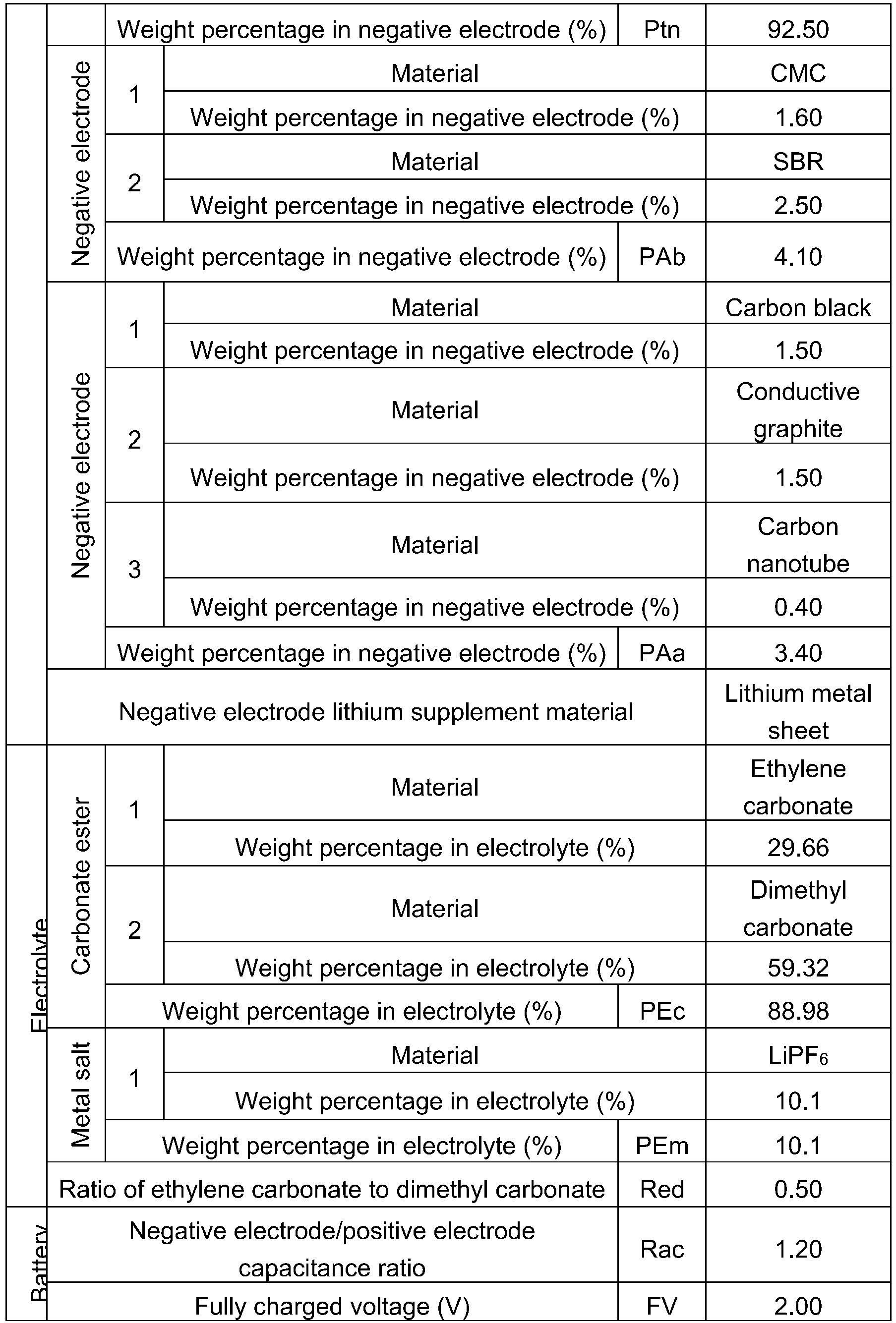

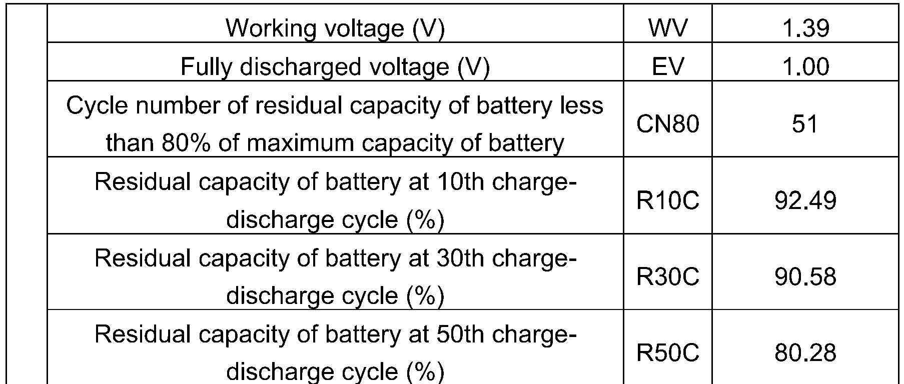

### <Example 10>

The battery of Example 10 includes a positive electrode, a negative electrode and an electrolyte. The positive electrode includes a positive electrode active material, and the positive electrode active material includes a lithium-manganese oxide. The negative electrode includes a negative electrode active material, and the negative electrode active material includes a niobium-titanium composite oxide.

The detail data of the battery of Example 10 are shown in Table 10.

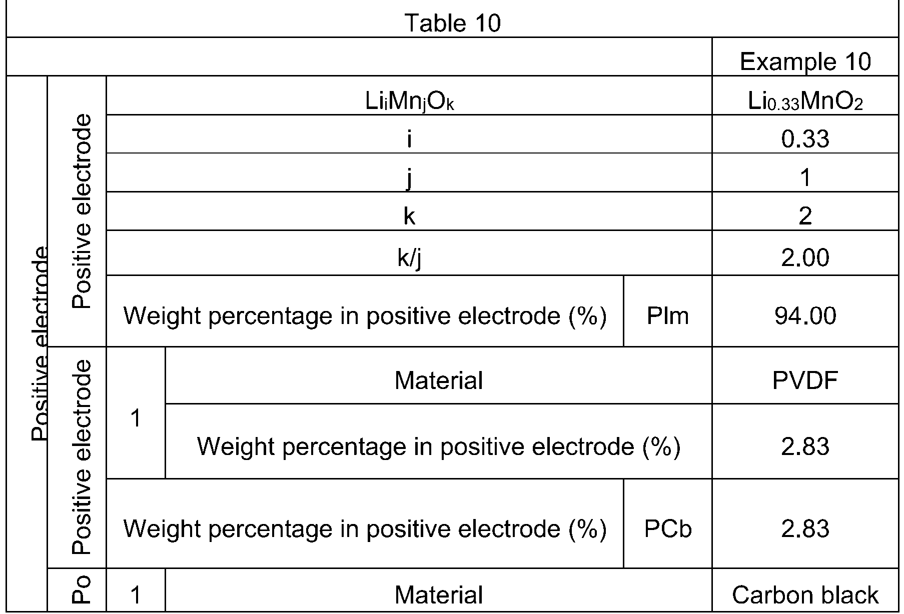

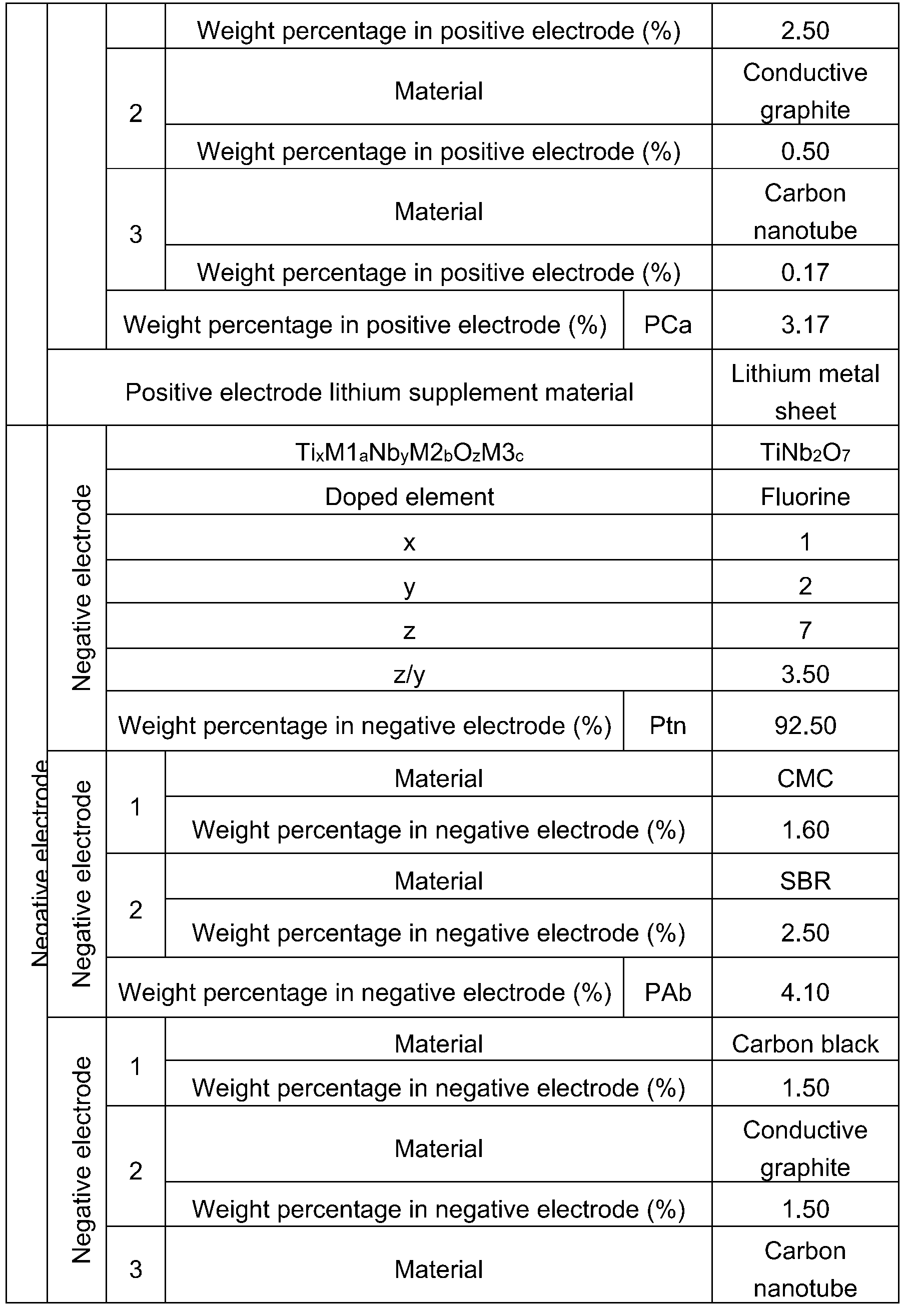

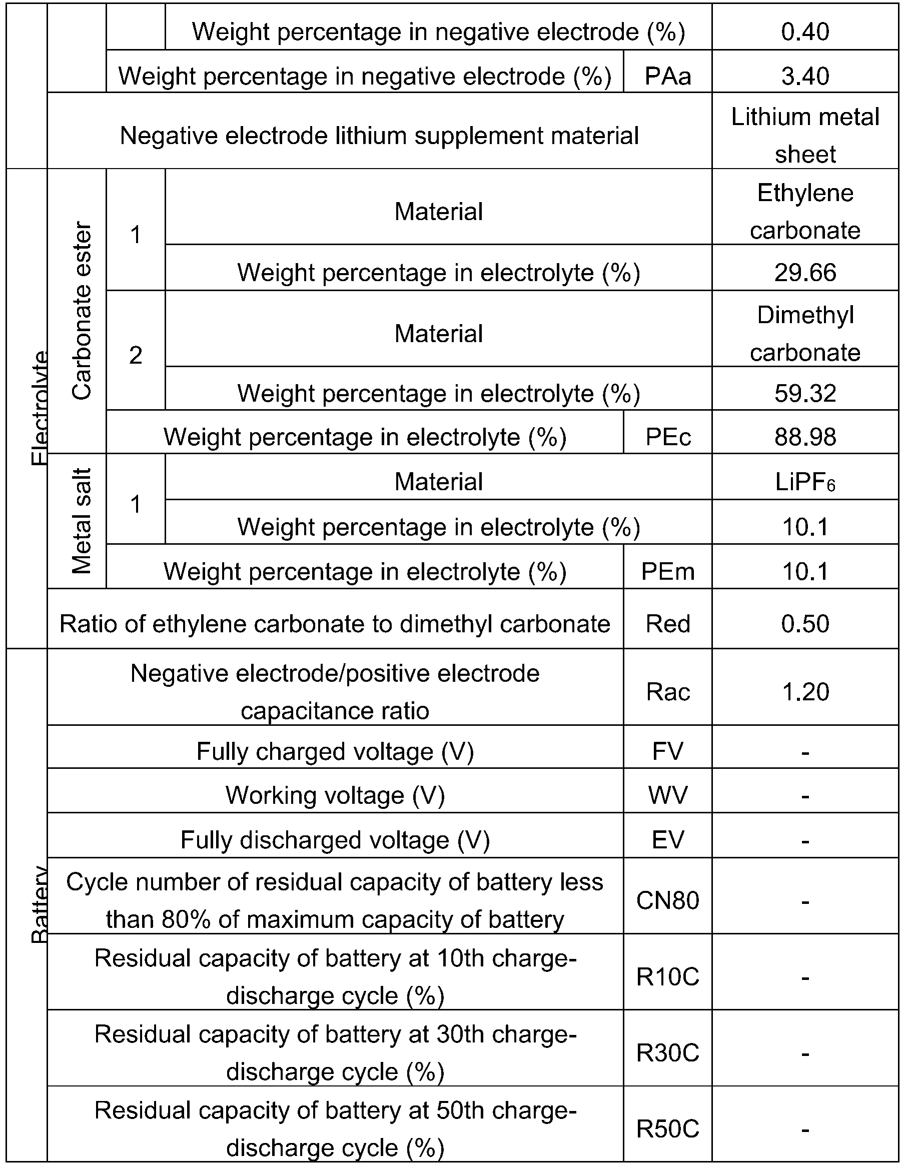

## Claims

1. A battery, **characterized in** comprising:
a positive electrode comprising a positive electrode active material;
a negative electrode comprising a negative electrode active material;
and
an electrolyte;
wherein the positive electrode active material comprises a lithium-manganese oxide, the negative electrode active material comprises a niobium-titanium composite oxide;
wherein the lithium-manganese oxide is LiᵢMnⱼOₖ, and the following conditions are satisfied: $0.15 \leq i \leq 0.50 ;$ $0.95 \leq j \leq 1.05 ;$ and $1.95 \leq k \leq 2.05 .$

2. The battery of claim 1, wherein the lithium-manganese oxide is LiᵢMnⱼOₖ, and the following condition is satisfied:$0.25 \leq i \leq 0.35 .$

3. The battery of claims 1 or 2, wherein a weight percentage of the lithium-manganese oxide in the positive electrode is PIm, and the following condition is satisfied: $93.00 % \leq Plm \leq 95.00 % .$

4. The battery of any one of claims 1 to 3, wherein the positive electrode further comprises a positive electrode adhesive, a weight percentage of the positive electrode adhesive in the positive electrode is PCb, and the following condition is satisfied: $2.50 % \leq PCb \leq 3.00 % .$

5. The battery of any one of claims 1 to 4, wherein the positive electrode further comprises a positive electrode conductive additive, a weight percentage of the positive electrode conductive additive in the positive electrode is PCa, and the following condition is satisfied: $3.00 % \leq PCa \leq 3.50 % .$

6. The battery of any one of claims 1 to 5, wherein a weight percentage of the niobium-titanium composite oxide in the negative electrode is Ptn, and the following condition is satisfied: $92.00 % \leq Ptn \leq 93.00 % .$

7. The battery of any one of claims 1 to 6, wherein the negative electrode further comprises a negative electrode adhesive, a weight percentage of the negative electrode adhesive in the negative electrode is PAb, and the following condition is satisfied: $4.00 % \leq PAb \leq 4.50 % .$

8. The battery of any one of claims 1 to 7, wherein the negative electrode further comprises a negative electrode conductive additive, a weight percentage of the negative electrode conductive additive in the negative electrode is PAa, and the following condition is satisfied: $3.00 % \leq PAa \leq 3.50 % .$

9. The battery of any one of claims 1 to 8, wherein the electrolyte comprises a carbonate ester, a weight percentage of the carbonate ester in the electrolyte is PEc, and the following condition is satisfied: $88.00 % \leq PEc \leq 89.00 % .$

10. The battery of any one of claims 1 to 9, wherein the electrolyte comprises a metal salt, a weight percentage of the metal salt in the electrolyte is PEm, and the following condition is satisfied: $9.50 % \leq PEm \leq 10.50 % .$

11. The battery of any one of claims 1 to 10, wherein the electrolyte comprises a carbonate ester, the carbonate ester comprises an ethylene carbonate and a dimethyl carbonate, a ratio of the ethylene carbonate to the dimethyl carbonate is Red, and the following condition is satisfied: $0.45 \leq Red \leq 0.55 .$

12. The battery of any one of claims 1 to 11, wherein a negative electrode/positive electrode capacitance ratio of the battery is Rac, and the following condition is satisfied: $1.15 \leq Rac \leq 1.25 .$

13. The battery of any one of claims 1 to 12, wherein a working voltage of the battery is WV, and the following condition is satisfied: $1.20 V \leq WV \leq 1.70 V .$

14. A battery, **characterized in** comprising:
a positive electrode comprising a positive electrode active material;
a negative electrode comprising a negative electrode active material;
and
an electrolyte;
wherein the positive electrode active material comprises a lithium-manganese oxide, the lithium-manganese oxide is LiᵢMnⱼOₖ, and the following conditions are satisfied: $0.05 \leq i < 1.00 ;$ $0.98 \leq j \leq 1.02 ;$ and $1.98 \leq k \leq 2.02 ;$
wherein the negative electrode active material comprises a niobium-titanium composite oxide, the niobium-titanium composite oxide is TiₓM1ₐNb_{y}M2_{b}O_{z}M3_{c}, M1, M2 and M3 are different doped elements, M3 is one of fluorine, chlorine, bromine, iodine and astatine, and the following conditions are satisfied: $0 < x ;$ $0 < y ;$ $0 < z ;$ $0 \leq a ;$ $0 \leq b ;$ and $0 < c .$

15. The battery of claim 14, wherein M3 is the fluorine.

16. The battery of claims 14 or 15, wherein a negative electrode/positive electrode capacitance ratio of the battery is Rac, and the following condition is satisfied: $1.10 \leq Rac \leq 1.30 .$

17. The battery of any one of claims 14 to 16, wherein the lithium-manganese oxide is LiᵢMnⱼOₖ, and the following condition is satisfied: $1.90 \leq k / j \leq 2.10 .$

18. The battery of any one of claims 14 to 17, wherein the niobium-titanium composite oxide is TiₓM1ₐNb_{y}M2_{b}O_{z}M3_{c}, and the following condition is satisfied: $3.40 \leq z / y \leq 3.60 .$

19. The battery of any one of claims 14 to 18, wherein the niobium-titanium composite oxide is TiₓM1ₐNb_{y}M2_{b}O_{z}M3_{c}, and the following conditions are satisfied: $0.98 \leq x \leq 1.02 ;$ $1.98 \leq y \leq 2.02 ;$ and $6.98 \leq z \leq 7.02 .$

20. The battery of any one of claims 14 to 19, wherein the lithium-manganese oxide is LiᵢMnⱼOₖ, and the following condition is satisfied: $0.20 \leq i \leq 0.40 .$

21. The battery of any one of claims 14 to 20, wherein a weight percentage of the lithium-manganese oxide in the positive electrode is Plm, and the following condition is satisfied: $90.00 % \leq Plm \leq 98.00 % .$

22. The battery of any one of claims 14 to 21, wherein the positive electrode further comprises a positive electrode adhesive, a weight percentage of the positive electrode adhesive in the positive electrode is PCb, and the following condition is satisfied: $1.50 % \leq PCb \leq 4.00 % .$

23. The battery of any one of claims 14 to 22, wherein the positive electrode further comprises a positive electrode conductive additive, a weight percentage of the positive electrode conductive additive in the positive electrode is PCa, and the following condition is satisfied: $1.50 % \leq PCa \leq 6.00 % .$

24. The battery of any one of claims 14 to 23, wherein a weight percentage of the niobium-titanium composite oxide in the negative electrode is Ptn, and the following condition is satisfied: $85.00 % \leq Ptn \leq 98.00 % .$

25. The battery of any one of claims 14 to 24, wherein the negative electrode further comprises a negative electrode adhesive, a weight percentage of the negative electrode adhesive in the negative electrode is PAb, and the following condition is satisfied: $2.00 % \leq PAb \leq 6.00 % .$

26. The battery of any one of claims 14 to 25, wherein the negative electrode further comprises a negative electrode conductive additive, a weight percentage of the negative electrode conductive additive in the negative electrode is PAa, and the following condition is satisfied: $1.50 % \leq PAa \leq 6.00 % .$

27. The battery of any one of claims 14 to 26, wherein the electrolyte comprises a carbonate ester, a weight percentage of the carbonate ester in the electrolyte is PEc, and the following condition is satisfied: $88.00 % \leq PEc \leq 89.00 % .$

28. The battery of any one of claims 14 to 27, wherein the electrolyte comprises a metal salt, a weight percentage of the metal salt in the electrolyte is PEm, and the following condition is satisfied: $7.00 % \leq PEm \leq 13.00 % .$

29. The battery of any one of claims 14 to 28, wherein the carbonate ester comprises an ethylene carbonate and a dimethyl carbonate, a ratio of the ethylene carbonate to the dimethyl carbonate is Red, and the following condition is satisfied: $0.20 \leq Red \leq 0.80 .$

30. The battery of any one of claims 14 to 29, wherein a fully charged voltage of the battery is FV, and the following condition is satisfied: $1.20 V \leq FV \leq 2.80 V .$

31. The battery of any one of claims 14 to 30, wherein a fully discharged voltage of the battery is EV, and the following condition is satisfied: $EV < 1.20 V .$

32. The battery of any one of claims 14 to 31, wherein a cycle number of a residual capacity of the battery less than 80% of a maximum capacity of the battery is CN80, and the following condition is satisfied: $40 \leq CN 80 .$

33. The battery of any one of claims 14 to 32, wherein a residual capacity of the battery at a 10th charge-discharge cycle is R10C, and the following condition is satisfied: $85.00 % \leq R 10 C .$

34. The battery of any one of claims 14 to 33, wherein a residual capacity of the battery at a 30th charge-discharge cycle is R30C, and the following condition is satisfied: $80.00 % \leq R 30 C .$

35. The battery of any one of claims 14 to 34, wherein a residual capacity of the battery at a 50th charge-discharge cycle is R50C, and the following condition is satisfied: $75.00 % \leq R 50 C .$

36. The battery of any one of claims 14 to 35, wherein the metal salt comprises a lithium salt.
